(19) Europäisches Patentamt
European Patent Office
Office européen des brevets

(11) **EP 4 235 867 A1**

(12) **EUROPÄISCHE PATENTANMELDUNG**

(43) Veröffentlichungstag:
**30.08.2023   Patentblatt 2023/35**

(21) Anmeldenummer: **22158309.9**

(22) Anmeldetag: **23.02.2022**

(51) Internationale Patentklassifikation (IPC):
*H01M 4/38* $^{(2006.01)}$        *H01M 6/52* $^{(2006.01)}$
*H01M 12/06* $^{(2006.01)}$      *H01M 50/664* $^{(2021.01)}$
*H01M 50/691* $^{(2021.01)}$    *H01M 4/66* $^{(2006.01)}$
*H01M 4/90* $^{(2006.01)}$       *H01M 6/50* $^{(2006.01)}$
*H01M 50/138* $^{(2021.01)}$    *H01M 50/209* $^{(2021.01)}$
*H01M 4/86* $^{(2006.01)}$       *H01M 12/02* $^{(2006.01)}$
*H01M 12/04* $^{(2006.01)}$      *H01M 50/673* $^{(2021.01)}$
*H01M 50/77* $^{(2021.01)}$

(52) Gemeinsame Patentklassifikation (CPC):
**H01M 4/386; H01M 4/8673; H01M 4/9016;**
**H01M 6/5088; H01M 6/52; H01M 12/02;**
**H01M 12/04; H01M 12/065; H01M 50/1385;**
**H01M 50/209; H01M 50/664; H01M 50/673;**
**H01M 50/691; H01M 50/77;** H01M 2004/027;

(Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder:
• **Evonik Operations GmbH**
  **45128 Essen (DE)**

• **Forschungszentrum Jülich GmbH**
  **52425 Jülich (DE)**

(72) Erfinder: **Die Erfindernennung liegt noch nicht vor**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(54) **VERFAHREN ZUM BETRIEB EINER VORRICHTUNG UMFASSEND MINDESTENS EINE SILIZIUM ENTHALTENDE ELEKTRISCHE PRIMÄRZELLE, EINE ELEKTROCHEMISCHE PRIMÄRZELLE, EIN SYSTEM UMFASSEND DIE VORRICHTUNG SOWIE EIN COMPUTERIMPLEMENTIERTES VERFAHREN**

(57)    Gegenstand der Erfindung ist eine Vorrichtung umfassend eine elektrochemische Primärzelle mit einer Anode, einer Kathode, einem Elektrolyten sowie vorzugsweise mindestens einem Separator, die Anode umfasst als Anodenmaterial Silizium, insbesondere ein Granulat von Silizium-Partikeln, und wobei die Vorrichtung eine Elektrolytfördereinheit und ein erstes und ein zweites Reservoir für den Austausch des Elektrolyten und vorzugsweise das Zuführen einer protischen Flüssigkeit, die kein Elektrolyt ist, aufweist sowie ein Verfahren für den Betrieb der Vorrichtung.

EP 4 235 867 A1

(52) Gemeinsame Patentklassifikation (CPC): (Forts.)
H01M 2004/8689; H01M 2300/0014

**Beschreibung**

Gegenstand der Erfindung ist eine Vorrichtung umfassend eine elektrochemische Primärzelle mit einer Anode, einer Kathode, insbesondere einer Luftkathode, einem Elektrolyten sowie vorzugsweise mindestens einem Separator, die Anode umfasst als Anodenmaterial Silizium, insbesondere ein Granulat von Silizium-Partikeln (z.B. ein dünnes, planar gesintertes Silizium-Plättchen), und, wobei die Vorrichtung eine Elektrolytfördereinheit und ein erstes und ein zweites Reservoir für den Austausch des Elektrolyten und vorzugsweise das Zuführen einer protischen Flüssigkeit, die kein Elektrolyt ist, aufweist, sowie ein Verfahren für den Betrieb der Vorrichtung. Des Weiteren umfasst die Erfindung eine Vorrichtung in Form einer mehrzelligen Batterie mit mindestens zwei miteinander verbundenen in Serie geschalteten Primärzellen. Eine Primärzelle besteht aus zwei Elektroden, nämlich einer Kathode und einer Anode, die einen Raum zwischen sich begrenzen, in dem ein Elektrolyt eingebracht ist.

Eine Elektrode ist ein Bauteil an/in dem Ladungen ausgetauscht werden. In der Chemie ist eine Kathode die Elektrode, an der eine Reduktionsreaktion stattfindet. Elektronen werden über einen elektrischen Leiter zugeführt und über die Elektroden an die chemischen Reaktionspartner abgegeben. Die elektrochemische Reaktion findet immer an der Phasengrenze zwischen der Elektrode und dem Elektrolyten statt. Der Elektrolyt kann eine Lösung, ein ionenleitender Feststoff oder eine elektrolytische Schmelze sein. Die Kathode ist die Gegenelektrode zur Anode. Zwischen diesen Elektroden wandern im Elektrolyten Ionen oder freie Elektronen. Die Kationen wandern zur Kathode und die Anionen zur Anode bei Stromdurchgang. Zwischen die Elektroden wird ein Separator eingebracht, der räumlich Anode und Kathode trennt, aber für die Ionen im Elektrolyten durchlässig ist. Man spricht oft auch von einer Membran als Separator. Im Fall einer Silizium Primärzelle wird an der Kathode Sauerstoff zu OH-Minus-Ionen reduziert, wogegen an der Anode, die im Wesentlichen aus Silizium besteht (> 98 Gew.-%), das in einer bevorzugten Variante zu einer Tablette oder zu einem dünnen Plättchen versintert ist, Silizium oxidiert wird. Unter Granulat ist granulare Materie, also ein körniger bzw. partikelförmiger Feststoff, der über ein Formgebungsverfahren in Form gebracht wird, zu verstehen. Beispielsweise wird pulverförmiges Silizium mittels dem bekannten Sparksintern in eine flache Tellerform gebracht und dabei verdichtet. Die Verdichtung geht einher von einer anfänglichen Schüttdichte von ca. 10 g/Liter (Herstellung), die durch Entlüften 300 g/Liter erreicht und durch Druck-Sparksintern eine beispielhafte Dichte zwischen 1,2 kg/Liter und 2,3 kg/Liter im Beispiel reinen Siliziums erreicht. Beim Verdichtungsprozess bleibt die Partikelstruktur des Siliziumpulvers im Wesentlichen erhalten.

Aufgrund des zunehmenden Bedarfes an E-Mobility im Personennahverkehr durch Elektroautos, Elektrofahrräder sowie elektrisch betriebene Busse etc. als auch bei zunehmender dezentraler Stromgewinnung besteht ein enormer Bedarf an umweltverträglichen Batterien, deren Komponenten einerseits unbeschränkt verfügbar und andererseits unbeschränkt recyclebar, umweltverträglich und/oder weiter verwendbar sein sollen. Silizium ist ein auf der Erde unbegrenzt verfügbarer Rohstoff. Darüber hinaus müssen die Komponenten einer Batterie kostengünstig verfügbar sein.

Des Weiteren ist es bekannt, durch ständige Zufuhr eines Brennstoffes in Brennstoffzellen, die eine galvanische Zelle aufweisen, in Gegenwart eines Oxidationsmittels elektrische Energie zu erzeugen. Grundsätzlich ist dieses Prinzip auch für Silizium-Luft-Batterien denkbar. Zudem sind übliche Silizium enthaltende Lithium-Ionen-Sekundärbatterien täglich weltweit im Einsatz.

Aufgabe der Erfindung war es, die Leistungsfähigkeit und Lebensdauer einer Silizium enthaltenden galvanischen Zelle, insbesondere alkalischen galvanischen Zelle, zu verbessern. Dabei liegt das Augenmerk auf einer Verlängerung der Lebensdauer der Silizium enthaltenden galvanischen Zelle während des Betriebs mit Leerlaufspannung, d.h. in der Phase in der kein aktiver Verbraucher, insbesondere elektrischer Verbraucher, angeschlossen ist oder kein Strom abgenommen wird. Im Betrieb mit Leeraufspannung kann in Gegenwart des Elektrolyten die offene Zellspannung (open curcuit voltage, OCV) bestimmt werden. Ferner soll die Leistungsdichte einer solchen Silizium enthaltenden galvanischen Zelle verbessert werden und eine hohe Anfangsspannung einstellbar sein. Eine galvanische Zelle ist eine elektrochemische Primärzelle.

Des Weiteren bestand die Aufgabe, ein Verfahren für den Betrieb einer Silizium enthaltenden galvanischen Zelle bereitzustellen.

Gelöst werden die Aufgaben mit einer Vorrichtung nach Anspruch 1 sowie einem Verfahren nach Anspruch 11 als auch mit einem System umfassend Mittel zur Ausführung des Verfahrens zum Betrieb der Vorrichtung oder insbesondere eines Systems als mehrzellige Batterie mit mindestens zwei miteinander verbundenen in Serie geschalteten Primärzellen.

Gegenstand der Erfindung ist somit eine Vorrichtung umfassend mindestens eine elektrochemische Primärzelle, wobei die Primärzelle aufweist eine Anode, eine Kathode, insbesondere Luftkathode, einen Hohlraum zur Aufnahme eines Elektrolyten, wobei die Anode als Anodenmaterial Silizium umfasst, wobei der Hohlraum mindestens eine Öffnung zur Zuführung und/oder Entfernung des Elektrolyten aufweist, wobei die Anordnung von Anode, Kathode, insbesondere Luftkathode, und Hohlraum mit der mindestens einen Öffnung zur Zuführung und/oder Entfernung des Elektrolyten dergestalt ist, dass zwischen Anode und Kathode ein Stromfluss durch den Elektrolyten möglich ist, wenn der Hohlraum zumindest teilweise bis vollständig mit dem Elektrolyten befüllt ist, und der Hohlraum der Primärzelle über die mindestens eine Öffnung mit einem ersten Reservoir, das mit Elektrolyt befüllbar ist, kommuniziert, wobei die Vorrichtung eine Elektrolytfördereinheit synonym zu Fördereinheit Elektrolyt, aufweist.

Vorzugsweise weist die Vorrichtung mindestens einen Separator auf. Der mindestens eine Separator kann als Umhüllung der Anode und/oder Kathode vorliegen. Liegt die Kathode als Luftkathode vor, weist die Vorrichtung eine für Kohlendioxid im Wesentlichen undurchlässige Membran auf, die der Luftkathode als äußerer Abschluss in der Vorrichtung zugeordnet ist.

Nach einer bevorzugten Alternative weist die Anode ein Granulat von Silizium-Partikeln auf, wobei die Silizium-Partikel des Granulates vorzugsweise in mindestens einer Dimension eine Kantenlänge von 3,5 mm oder einen Durchmesser von 3,5 mm aufweisen und vorzugsweise mindestens zwei der drei Durchmesser, deren Mittelpunkt im Kartesischen Koordinatensystem im Schnittpunkt der x,y und z-Achsen liegt, eine Länge von größer gleich 3,5 mm aufweisen. In einem solchen Koordinatensystem beträgt die Dritte Dimension vorzugsweise größer gleich 1 mm (Dicke des Silizium-Partikels). Besonders bevorzugt weisen die Partikel Kantenlängen von größer gleich 3,5 mm oder Durchmesser von größer gleich 3,5 mm und eine Dicke von 1 mm auf.

Bevorzugt umfasst die Anode ein Granulat von Silizium-Partikeln mit einer mindestens bimodalen, vorzugsweise mit einer mindestens trimodalen Verteilung an Fraktionen von Silizium-Partikeln, wobei eine Fraktion ausgewählt ist aus Silizium-Partikeln mit einem Durchmesser größer als 10 nm und kleiner gleich 3 mm, bevorzugt sind Granulate, die in mindestens einer Dimension eine Kantenlänge von 1 mm aufweisen. Bevorzugt umfasst die Anode kristalline Silizium-Partikel umfassend 111-Ebenen. Vorteil der groben Silizium-Partikel ist eine optimale Abstimmung von aktiver Oberfläche und Porosität, die ein Eindringen des wässrigen, alkalischen Elektrolyten ermöglicht.

Besonders bevorzugt kann die Anode als Anodenmaterial Silizium umfassen, das in Granulat-Form von Silizium-Partikeln ausgewählt aus amorphen, kristallinen oder polykristallinen Partikeln vorliegt. Besonders Bi- oder multimodale Mischungen umfassen vorzugsweise zudem Silizium-Partikel als Agglomerate von Silizium-Primärpartikeln mit einer Partikelgröße zwischen 1 nm bis 3000 nm, die vorzugsweise im Wesentlichen amorph sind.

Grundsätzlich kann das Anodenmaterial Silizium als Granulat in Form von Silizium-Partikeln umfassen, wobei die Partikelgrößen im Bereich von 10 nm bis 4 mm vorliegen können. Bspw. als Partikel in einem Granulat mit bi- oder trimodaler Verteilung der Partikelgrößen. Die Bereiche der Partikelgrößen können von 0,1 bis 300 Mikrometer oder von 0,1 bis 30 Mikrometer oder von 10 nm bis 1000 nm, vorzugsweise von 19 nm bis 300 nm betragen. Bevorzugt liegen diese Silizium-Partikel als amorphe und/oder polykristalline Partikel vor. Dabei kann es besonders bevorzugt sein, wenn das Anodenmaterial ein bi- bis multimodales Granulat von Silizium-Partikeln oder in Form einer gepressten oder gesinterten Tablette vorliegt.

Nach einer weiteren bevorzugten Ausführungsform umfasst eine Anode, insbesondere jede Anode jeweils unabhängig von anderen Anoden in Primärzellen, in dem Verfahren oder in dem System umfassend Primärzellen, als Anodenmaterial Silizium mit einem Gehalt an Bor von 10 Gew.-ppm bis 1,8 Gew.-% in Bezug auf die Gesamtzusammensetzung des Siliziums von 100 Gew.-%, insbesondere weist das Anodenmaterial Silizium-Partikel mit einem Gehalt an Bor von 10 Gew.-ppm bis 1,8 Gew.-% in Bezug auf die Gesamtzusammensetzung der Silizium-Partikel von 100 Gew.-%, besonders bevorzugt ist Anodenmaterial in Form von aneinander gesinterten Silizium-Partikeln.

Der Typ der Silizium-Luft-Batterie verwendet Silizium (Siliziummetall) als Anode und Luftsauerstoff ($O_2$) als Kathode. Die Kathode der Silizium-Luft-Batterie wird als Luftkathode bezeichnet. Die wässrige Lösung von Kaliumhydroxid (KOH) wird in einer bevorzugten Ausführungsform als Elektrolyt in die Silizium-Luft-Batterie aufgenommen. Nachdem der Luftsauerstoff die chemische Reaktion der Kathode zu einem Hydroxylion ($OH^-$) eingegangen ist, unterliegt die aus dem Siliziumpartikelgemisch (Granulat, Siliziumsirup, Siliziumplatte oder Silziumfolie) bestehende Siliziumanode der Sauerstoff Reduktionsreaktion zur Ausgabe stabiler Zellspannungen (Entladungsspannung). Die chemische Formel der Sauerstoffreduktionsreaktion ist wie folgt aufgeführt:

Kathode: $H_2O + O_2 + 2e- \rightarrow 2OH^-$
Anode: $Si + 4OH- \rightarrow Si(OH)_4 + 4e-Si(OH)4$ in $KOH \rightarrow SiO_2 + 2 H_2O$
Reaktion: $Si + O_2 \rightarrow SiO_2$

Da die Luftkathode der Silizum-Luft-Batterie nur als Medium verwendet wird, darf ihre Aktivität/Masse nicht verändert oder verbraucht werden. Während der Herstellung der Silizium-Luft-Batterie kann die Beladung der Silizium-Anode der Silizium-Luft-Batterie erhöht werden, um die Kapazität und die spezifische Energie zu erhöhen, wodurch das Ziel der Miniaturisierung der Silizium-Luft-Batterie erreicht wird.

Verfahren zur Herstellung von Luftkathoden sind bekannt. Luftkathoden bestehen aus einer Mehrschichtstruktur. Die Mehrschichtstruktur beinhaltet Diffusionsschichten und das TrägerSubstrat. Die finale Mehrschichtstruktur wird verpresst und getempert. Die Mehrschichtstruktur wird dann erneut getempert, nachdem Katalysatorschichten auf die Diffusionsschichten aufgetragen wurden.

Die Luftkathode mit einem mehrlagigen Aufbau besteht aus einem Träger, zwei Diffusionsschichten, die auf einer oberen Fläche und auf einer unteren Fläche des Trägers laminiert sind; und drei Aktivierungsschichten, die wiederum je auf eine der beiden Diffusionsschichten laminiert sind. Um Aktivierungsschichten herzustellen sind verschiedene Beladungen oder verschiedene Katalysatortypen einer Suspension zugegeben. Aktivierungsschichten und Diffusionsschichten werden gleichzeitig durch Tempern gewonnen

Die Dicke der Luftkathode liegt zwischen 0.01 und 20 mm und die Dichte der Luftkathode (abhängig von der Katalysatorbeladung) beträgt zwischen 0.01 und 5.0 g/cm$^3$.

Eine beispielhafte Luftkathode umfasst im Kern ein elektrisch leitendes Ableitgitter oder Ableitnetz. Das Ableitnetz bzw. Ableitgitter ist ein Metalldrahtnetz, ein Metallnetzgitter aus einem rostfreien Stahl, Kupfer, Kohlenstoff, Kohlenstofffasern, Nickel, einer Kupferlegierung, einer Nickellegierung oder aus anderen elektrisch leitenden Elementen, Metallen oder Legierungen davon. Insbesondere ist bei der Auswahl der Materialien der Ableitgitter/-netze auf Korrosionsfestigkeit bei hohen pH-Werten zu achten.

Die Diffusionsschicht der Luftkathode ist aus wasserabweisendem Kohlenstoffmaterial und einem PTFE-Bindemittel. Zum Formen einer Aktivierungsschicht wird eine Suspension verwendet, welche ein wasserabweisendes Kohlenstoffmaterial, PTFE-Bindemittel und einem Katalysator umfasst, im Gemisch mit Wasser, Methylalkohol oder Isopropanol oder Gemischen von mindestens zweien der vorgenannten Verbindungen. Wasserabweisendes Kohlenstoffmaterial, das PTFE-Bindemittel und die Katalysatoren sind in einer Variante in einem Gewichtsverhältnis von 3:1:2 miteinander vermischt, während das Gewicht des Methylalkohols, Isopropanols oder des entionisierten Wassers das 500-fache des Gewichts des wasserabweisenden Kohlenstoffmaterials betragen kann. Stabilisiert wird das Komposit aus PTFE-Bindemittel des Trägers, der beiden Diffusionsschichten und die drei Aktivierungsschichten durch Tempern bzw. Sintern. Als Katalysatoren werden Metalloxid oder Salze verwendet. Katalysatoren sind Mangan, Silber, ggf. Kobalt und Nickel wobei Manganoxid mit ca. 500 Gew.-ppm/cm$^2$ den drei Aktivierungsschichten beigefügt sind, um einen stabilen Entladungsstrom zu erhalten.

Die Kathode ist bevorzugt eine Luftkathode. In dieser Alternative weist die Primärzelle an der Luftkathode einen Lufteinlass auf, der eine Gas-durchlässige Membran sein kann, insbesondere eine für Sauerstoff durchlässige Membran und bevorzugt für Kohlendioxid undurchlässige Membran. Bevorzugt ist eine Membran aus einem inerten Polymer, bevorzugt aus einem Polyfluorpolyethylen, Polyfluorpolypropylen oder Co-Polymeren davon. Der Aufbau der Luftkathode ist in der Regel eine Sandwichbauweise umfassend eine gasdurchlässige Membran, ein metallisches Netz zur Stromleitung und mindestens einen Katalysator, insbesondere einen porösen Katalysator.

Gegenstand der Erfindung ist eine Vorrichtung umfassend mindestens eine elektrochemische Primärzelle (Silizium enthaltende galvanische Zelle synonym zu Primärzelle), die vorzugsweise frei von Lithium ist, wobei vorzugsweise frei von Lithium bedeutet, dass der Gehalt an Lithium im geladenen Zustand unter 0,1 Gew.-% in der Gesamtzusammensetzung der Primärzelle beträgt, insbesondere umfassend die Anode, die Kathode und den Elektrolyten, vorzugsweise beträgt der Gehalt an Lithium im Elektrodenmaterial der Anode im geladenen Zustand unter 1 Gew.-%. Vorzugsweise soll die galvanische Zelle Edukte und Reaktionsprodukte aufweisen, die aus Recyclingprozessen der Silizium-Wafer-Herstellung stammen, Nebenprodukte sind und/oder aus alternativen Recyclingprozessen des Siliziums stammen und somit weiterverwendet werden können. Die CO$_2$-Reduktion durch das Recycling von Silizium-Resten, Nebenprodukten, Sägeresten oder dem Recycling defekter, gebrauchter oder sonstiger Silizium-Wafer ist erheblich. Vorteilhaft können die Silizium-Wafer gemahlen werden, bspw. in Kugelmühlen auf Partikel mit einer Dimension von ca. 0,1 mm, insbesondere ca. 0,001 bis 10 mm.

Besonders bevorzugt ist eine Vorrichtung umfassend mindestens die elektrochemische Primärzelle mit Hohlraum zur Aufnahme eines Elektrolyten mit mindestens einer Öffnung zur Zuführung und/oder Entfernung des Elektrolyten in ein erstes Reservoir, das mit Elektrolyt befüllbar ist, wobei der Hohlraum der Primärzelle i) über die mindestens eine Öffnung auch mit einem zweiten Reservoir kommuniziert oder ii) im Hohlraum eine zweite Öffnung vorgesehen ist, um mit einem zweiten Reservoir zu kommunizieren und wobei die Vorrichtung eine Elektrolytfördereinheit aufweist.

Der Hohlraum der Primärzelle kann mit einer weiteren Öffnung oder einem Ventil versehen sein, um Luft, Inertgas einströmen zu lassen und den Elektrolyten mittels Schwerkraft oder Druckluft in das erste Reservoir zu überführen. Der Hohlraum ist dann entleert und die Primärzelle befindet sich im Betrieb in Leerlaufspannung. Die weitere Öffnung oder das Ventil sind vorzugsweise oben auf dem Hohlraum angeordnet und die Öffnung und das Reservoir unterhalb des Hohlraumes. Zum Umschalten in den Entladeschritt wird der Elektrolyt von der Elektrolytfördereinheit aus dem ersten Reservoir in den Hohlraum zugeführt. Alternativ kann das erste Reservoir auch oberhalb des Hohlraumes angeordnet sein, dann wird der Elektrolyt aktiv von der Elektrolytfördereinheit aus dem Hohlraum in das erste Reservoir gefördert und kann zum Umschalten in den Entladeschritt in den Hohlraum abgelassen werden.

Aus einem zweiten Reservoir kann alternativ oder zusätzlich über die weitere Öffnung des Hohlraumes der Primärzelle die protische Flüssigkeit in den Hohlraum zugeführt werden, um a) den Elektrolyten zu verdrängen oder b) wenn der Elektrolyt sich im ersten Reservoir befindet. Die protische Flüssigkeit kann von einer Fördereinheit zum Fördern der protischen Flüssigkeit, diese für den Betrieb in Leerlaufspannung dem Hohlraum zuführen und/oder dem zweiten Reservoir zuführen. Zum Umschalten in den Entladeschritt kann die protische Flüssigkeit von der Fördereinheit aus dem Hohlraum in das zweite Reservoir überführt werden.

Das zweite Reservoir kann mit einer protischen Flüssigkeit, die kein Elektrolyt ist, befüllbar sein oder ist mit einer solchen protischen Flüssigkeit befüllt. Die protische Flüssigkeit kann vorzugsweise einen pH-Wert im Bereich von 5,5 bis 5,9 aufweisen und ist vorzugsweise wässrig. Besonders bevorzugt ist Wasser, vollentsalztes Wasser, bidestilliertes Wasser, ein Alkohol, wie ein Alkanol, wie Methanol, Ethanol, Propanol, Butanol, Pentanol, Ethylenglykol, Propandiol, Polyole und/oder Zucker, oder eine wässrige Mischung von Wasser mit mindestens einem der vorgenannten Alkohole und/oder Zucker. Des Weiteren kann die protische Flüssigkeit ausgewählt sein aus Wasser, Alkohol und Polyalkenyloxiden oder Gemischen dieser.

Nach einer besonders bevorzugten Ausführungsform umfasst die Primärzelle einen Hohlraum der über die mindestens eine Öffnung mit einem zweiten Reservoir kommuniziert. Das zweite Reservoir ist mit einer protischen Flüssigkeit, die kein Elektrolyt ist, befüllbar, wobei die protische Flüssigkeit, insbesondere einen pH-Wert im Bereich 2 bis 8, besonders bevorzugt von 5,5 bis 8 aufweist, bevorzugt ist die protische Flüssigkeit wässrig. Nach einer besonders bevorzugten Ausführungsform ist die wässrige Flüssigkeit ausgewählt aus Wasser, Alkanol mit 1 bis 6 C-Atomen und einem Polyalkenyloxid mit einer terminalen Hydroxy oder Carbonsäure-Gruppe. Die protische Flüssigkeit enthält bevorzugt eine Hydroxid-Konzentration von kleiner gleich 0,1 mol/l, bevorzugt kleiner gleich 0,01 mol/l.

Nach einer besonders bevorzugten Ausführungsform kann die protische Flüssigkeit umfassen, insbesondere bestehen aus, Wasser, mindestens einem Alkanol mit 1 bis 6 C-Atomen und ca. 100 Atom-ppm Polyalkenyloxid mit einer terminalen Hydroxy oder Carbonsäure-Gruppe. Der pH-Wert der protischen Flüssigkeit beträgt vorzugsweise pH = 7 +/- 0,5, insbesondere pH mit

+/- 0,2. Das Zuführen und/oder Entfernen der protischen Flüssigkeit kann mittels eines pH-Sensors und Überwachung des pH-Wertes gesteuert werden. Der pH-Wert wird vorteilhaft elektronisch mittels eines pH-Messsensors überwacht. Auf diese Weise kann ein Austausch oder eine Verdünnung der protischen Flüssigkeit angezeigt werden, der manuell oder automatisiert erfolgen kann.

Zur Herstellung der protischen Flüssigkeit wird vorzugsweise als Wasser destilliertes Wasser eingesetzt. Das Wasser zur Herstellung der Elektrolytzusammensetzung weist vorzugsweise bei 25 °C, eine Leitfähigkeit von größer gleich 0,055 $\mu$S/cm, weiter bevorzugt von größer gleich 0,5 $\mu$S/cm und vorzugsweise kleiner 250 $\mu$S/cm auf. Bei ca. 100 °C kann die Leitfähigkeit des Wassers, vorzugsweise vollentsalztem Wasser (VE-Wasser) bis zu 3 $\mu$S/cm betragen, bei 60 °C bis zu 2 $\mu$S/cm. Der Gehalt an Metallen des Wassers zur Herstellung der Elektrolytzusammensetzung beträgt vorzugsweise kleiner gleich 100 $\mu$g/l, bevorzugt kleiner gleich 50 $\mu$g/l (ICP-MS). In der Elektrolytzusammensetzung ist die Leitfähigkeit erheblich höher und liegt vorzugsweise bei größer gleich 1 mS/cm bei 25 °C, bevorzugt bei größer gleich 0,5 S/cm bei 25 °C.

Es kann ferner bevorzugt sein, wenn die Vorrichtung auch eine Fördereinheit zur Förderung der protischen Flüssigkeit aufweist. Die Fördereinheit zur Förderung der protischen Flüssigkeit kann aus den gleichen Fördereinheiten zur Förderung des Elektrolyten (Elektrolytfördereinheit) ausgewählt sein.

Ebenso ist bevorzugt, wenn die Vorrichtung, oder das erste Reservoir und/oder das zweiten Reservoir jeweils unabhängig eine Temperiereinheit zur Einstellung der Temperatur des einzufüllenden Elektrolyten und/oder der protischen Flüssigkeit aufweist. Dabei kann es bevorzugt sein, dass der Elektrolyt auf eine Temperatur größer gleich 15 °C, insbesondere größer gleich 20 °C, bevorzugt auf größer gleich 25 °C eingestellt wird und/oder die Temperatur der protischen Flüssigkeit auf eine Temperatur unterhalb 30 °C, vorzugsweise auf kleiner gleich 25 °C, bevorzugt kleiner gleich 20 °C eingestellt wird.

Nach einer Ausführungsform weist der Hohlraum mindestens eine Öffnung zur Zuführung und/oder Entfernung des Elektrolyten auf, und wobei der Hohlraum der Primärzelle über die mindestens eine Öffnung mit einem ersten Reservoir, das mit Elektrolyt befüllbar ist, kommuniziert, insbesondere ist die Öffnung über eine Leitung mit dem ersten Reservoir verbunden. Ferner kann der Hohlraum mindestens eine erste und mindestens eine zweite Öffnung aufweisen, wobei durch die erste Öffnung ein Elektrolyt in den Hohlraum zuführbar ist und aus der zweiten Öffnung entfernbar ist.

Nach einer besonders bevorzugten Ausführungsform weist der Hohlraum in der Primärzelle eine erste und optional eine zweite Öffnung auf, wobei durch die erste Öffnung der Elektrolyt in den Hohlraum zuführbar und entfernbar ist oder durch die erste Öffnung der Elektrolyt in den Hohlraum einführbar und durch die zweite Öffnung entfernbar ist, wobei vorzugsweise die erste und zweite Öffnung jeweils unabhängig über eine Leitung mit dem ersten Reservoir verbunden ist.

Nach einer besonders bevorzugten Ausführungsform weist der Hohlraum in der Primärzelle eine erste und optional eine zweite Öffnung, wobei auch durch die erste Öffnung die protische Flüssigkeit in den Hohlraum zuführbar und entfernbar ist oder durch die erste Öffnung die protische Flüssigkeit in den Hohlraum einführbar und durch die zweite Öffnung entfernbar ist, wobei vorzugsweise die erste und zweite Öffnung des Hohlraumes jeweils unabhängig über eine Leitung mit dem zweiten Reservoir verbunden ist. Alternativ kann der Hohlraum eine dritte und vierte Öffnung aufweisen, durch die die protische Flüssigkeit zuführbar und entfernbar ist, wenn durch die erste und zweite Öffnung der Elektrolyt zuführbar und entfernbar ist.

Die Elektrolytfördereinheit oder die Fördereinheit zur Förderung der protischen Flüssigkeit können umfassen eine Pumpe, insbesondere eine Alkali beständige Pumpe; Verdichter oder Umwälzeinheit, bevorzugt eine Membranpumpe, Strömungspumpe, Verdrängerpumpe, Peristaltikpumpe, Strahlpumpe, Schlauchpumpe, Kolbenpumpe, Kolbenmembranpumpe Drehschieberpumpe, Exenterpumpe, Sumpfpumpe oder Vakuumpumpe.

Nach einer besonders bevorzugten Alternative weist die Vorrichtung mindestens eine Absperrarmatur auf, vorzugsweise eine elektrisch digital schaltbare Absperrarmatur. Die Absperrarmatur dient dazu die Kommunikation zwischen Hohlraum und erstem oder zweitem Reservoir zu unterbrechen und optional zu steuern, wenn bspw. eine Primärzelle aus dem Entladeschritt in den Betrieb in Leerlaufspannung geschalten werden soll oder umgekehrt. In dieser Phase wird der Elektrolyt aus dem Hohlraum entfernt und es kann die protische Flüssigkeit in den Hohlraum zugeführt werden. Somit weist die Vorrichtung vorzugsweise jeweils unabhängig im Hohlraum, in einer beliebigen Öffnung, der ersten Öffnung, zweiten Öffnung, dritten Öffnung, vierten Öffnung, in einer oder mehreren Leitungen die eine Öffnung mit einem der Reservoire verbinden, im ersten Reservoir, im zweiten Reservoir, und/oder in der Fördereinheit für den Elektrolyten bzw. Elektrolytfördereinheit mindestens eine Absperrarmatur auf, die zum Zuführen und Entfernen, wie Ablassen oder Abpumpen, des Elektrolyten, insbesondere des alkalischen Elektrolyten, und/oder der protischen Flüssigkeit, insbesondere einer protischen Flüssigkeit mit einem pH im Bereich von 2 bis 8, bevorzugt von 5,5 bis 8, geeignet ist.

Eine Absperrarmatur umfasst vorzugsweise einen Sperrkörper, ein Ventil, Schieber, Hahn und/oder eine Klappe. Bei einem Ventil und einem Schieber wird der Flüssigkeitsstrom mit Hilfe eines verschiebbaren Sperrkörpers teilweise oder komplett getrennt. Ventile können eine Vielzahl unterschiedlicher Sperrkörper aufweisen mit unterschiedlichen Dichtflächen, wie Kegel-, Teller-, Nadel-, Kugel-, Kolben- und Membranventile. Bei einem Ventil mit Hahn oder Klappe wird der Sperrkörper im Gehäuse gedreht.

Die Absperrarmatur kann vorzugsweise aus einem gegenüber alkalischen Einflüssen beständigen Material bestehen. Bevorzugte Materialien zur Herstellung der Komponenten der Vorrichtung oder zur Beschichtung der jeweiligen inneren Oberflächen, wie des Hohlraumes, einer Leitung, eines Reservoirs, einer Absperrarmatur, eines Separators können ausgewählt sein aus PEEK, PAEK, Polysulfonen, , Polyimiden, PMMA, COC (Cyclo-olefin-Co-polymere), wie Ethylennorbornencopolymer, Ethylencyclooctencopolymer, Ethylencyclohexencopolymer, Ethylencycloheptencopolymer, oder aus Fluorpolymeren, Polysulfid enthaltenden Polymeren, Polysulfon enthaltenden Polymeren, Polyaryletherketonen, PAEK (Polyaryletherketonen), PEEK (Polyetheretherketonen, 4-Hydroxyphenyl(4-phenoxyphenyl)methanon), PEK (Polyether-ketonen); PEKK (Poly(etherketonketonen)), PEEEK (Poly(etheretheretherketonen)), PEEKK (Poly(etherether-ketonketonen)), PEKEKK (Poly(etherketonetherketon-ketonen)); PES (Polyarylsulfonen), PPSU (Polyarylsulfonen), PSU (Polysulfonen), PPS (Polyphenylensulfiden), PFA (Perfluoralkoxy-Polymeren), PFE (Poly(fluorenylenethylen)polymeren); PVDF (Polyvinylidenfluoriden), PCTFE (Polytetrafluoroethylen), PAI (Polyamideimiden); PI (Polyimiden), PEI (Polyetherimiden), PBI (Polybenz-imidazolen) .

Nach einer weiteren bevorzugten Alternative kann die Vorrichtung mindestens eine Temperiereinheit umfassen, wobei die Temperiereinheit mindestens einen Wärmetauscher und/oder mindestens ein direktes oder indirektes Heizmittel sein kann und optional mindestens einen Temperatursensor bzw. Temperaturfühler. Die Heizmittel können umfassen eine elektrische Widerstands-Heizung, wie elektrischen Heizdraht, heizbare Keramik, eine elektrische Infrarot-Heizung, induktive Heizmittel, Latentwärmespeicher und/oder eine Mikrowellen-Heizung. Bevorzugt sind eine erste und eine zweite Temperiereinheit, die vorzugsweise jeweils dem ersten und zweiten Reservoir zugeordnet sind. Der mindestens eine Temperatursensor kann umfassen Widerstandsmesser, Schwingquartz oder andere dem Fachmann bekannte Temperatursensoren. Besonders bevorzugt sind Temperatursensoren, insbesondere Temperatursensoren mit elektrischer Signalweiterleitung, bevorzugt mit Prozessanschluss, der oder die ausgewählt sind aus Temperatursensoren umfassend eine Bimetall-Spirale, Temperatursensor mit Widerstandsmessung bspw. gemäß DIN EN 60751 oder Temperatursensor umfassend Thermoelement (Verhalten gemäß Seebeck-Effekt) und/oder Schwingquarz. Ferner kann die Temperiereinheit eine elektronische Steuereinheit umfassen, die in einem computerimplementierten Verfahren, d.h. in einem von einem Computer ausgeführten Verfahren, angesteuert werden kann. Wärmetauscher kommen in Betracht, Rohr-in-Rohr-Wärmetauscher, die für den Elektrolytwechsel und/oder Zuführung oder Entfernung der protischen Flüssigkeit beim Betreib in Leerlaufspannung der jeweiligen Primärzelle genutzt werden können. Zur Temperierung mittels Wärmetauscher können grundsätzlich alle Wärme- oder Kältequellen vorzugsweise in einem Fahrzeug genutzt werden.

Des Weiteren ist es bevorzugt, wenn die mindestens eine erste und die zweite Öffnung, optional die dritte und vierte Öffnung, im Hohlraum der Primärzelle über mindestens eine Leitung mit dem ersten und dem zweiten Reservoir verbunden sind und in der Leitung ein oder zwei Absperrarmaturen vorgesehen sind. Mit diesem Aufbau kann die Zuführung und/oder Entfernung des Elektrolyten als auch der protischen Flüssigkeit in und aus dem Hohlraum heraus, leicht und effizient eingestellt werden. Weiter bevorzugt werden die Fördereinheiten und optional die Absperrarmaturen mit digitalen Mitteln, insbesondere in einem computerimplementierten Verfahren, geschaltet, gesteuert und/oder geregelt.

Gleichfalls Gegenstand der Erfindung ist eine Vorrichtung in der die Fördereinheit im ersten und/oder zweiten Reservoir oder in einer der Leitungen zwischen einer Öffnung und einem Reservoir angeordnet sind. Ferner ist es bevorzugt, wenn mindestens ein Heizmittel a) im Hohlraum und/oder im Reservoir oder b) in einer Leitung und/oder außen an einer Leitung angeordnet ist. Ferner kann die Vorrichtung mindestens einen Temperatursensor, insbesondere Temperatursensor mit elektrischer Signalweiterleitung, zur Bestimmung der Temperatur des Elektrolyten im Hohlraum, in der Leitung der ersten Öffnung, in der Leitung der zweiten Öffnung und/oder im Reservoir aufweisen. Bevorzugte Temperatursensoren können ausgewählt sein aus, insbesondere ein Temperatursensor mit elektrischer Signalweiterleitung, bevorzugt mit Prozessanschluss, Temperatursensoren umfassend eine Bimetall-Spirale, Temperatursensor mit Widerstandsmessung (definiert in DIN EN 60751) oder Temperatursensor umfassend Thermoelement (Verhalten gemäß Seebeck-Effekt). Des Weiteren weist eine Primärzelle in der Vorrichtung, einen Potentiostaten mit Signalweiterleitung auf. Die Vorrichtung umfasst vorzugsweise einen Potentiostaten und elektrische Anschlüsse, um die Messdaten des Potentiostaten einem System zur Datenverarbeitung zu übermitteln, dass das computerimplementierte Verfahren für den Betrieb der Vorrichtung oder eines Systems umfassend die Vorrichtung steuert.

Der Hohlraum der Primärzelle ist bevorzugt eine Durchflusszelle. Nach einer weiteren Alternative kann der Hohlraum gebildet werden aus einem Gehäuse in dem bevorzugt die Anode in dem Gehäuse angeordnet ist und, wobei im Bereich mindestens einer Seitenwand des Gehäuses eine oder mehrere Kathoden, insbesondere Luftkathoden, jeweils vom Hohlraum des Gehäuses durch mindestens einen Separator getrennt anbringbar sind, und, wobei die mindestens eine Öffnung zur Zuführung und/oder Entfernung des Elektrolyten und/oder der protischen Flüssigkeit aus dem Hohlraum an der Seitenwand des Gehäuses vorgesehen ist, vorzugsweise ist die mindestens eine Öffnung nicht an einer der Seitenwände vorgesehen an denen die Kathode(n) angeordnet sind.

Bevorzugt ist die Anode im Hohlraum des Gehäuses angeordnet, wobei diese als Anodenmaterial Silizium umfasst, und die Anode insbesondere eine Anordnung von plattenförmigen Anoden ist, und nach außen flüssigkeitsdicht im Hohlraum der Vorrichtung am Gehäuse anbringbar ist. Die Anode kann beispielsweise in das Gehäuse eingeschoben und flüssigkeitsdicht befestigt werden. Der Hohlraum in dem Gehäuse kann gebildet werden, wenn mindestens eine Anode und mindestens eine Kathode an dem Gehäuse flüssigkeitsdicht mit dem Gehäuse verbunden sind. Das Gehäuse, die Anode, die Kathode, und optional mindestens ein Separator sowie die mindestens eine Öffnung, die mindestens zweite Öffnung, die mindestens eine Leitung zwischen diesen Öffnungen und dem ersten und dem zweiten Reservoir sind flüssigkeitsundurchlässig nach außen abgedichtet. Die Anode kann vorzugsweise plattenförmig beispielsweise in einem plattenförmigen sacklochartig ausgebildeten Separator eingebracht vorliegen. Diese plattenförmig mit Anodenmaterial gefüllten Separatoren können zu Anodenstacks gestapelt als Anoden in den Hohlraum des Gehäuses eingebracht werden.

Ebenso Gegenstand der Erfindung ist ein Verfahren zum Betrieb einer Vorrichtung, insbesondere ein computerimplementiertes Verfahren (ein von einem Computer ausgeführtes Verfahren), umfassend mindestens eine elektrochemische Primärzelle, wobei die elektrochemische Primärzelle eine Anode, eine Kathode und einen Hohlraum zur Aufnahme eines Elektrolyten aufweist, wobei der Hohlraum mindestens eine Öffnung zur Zuführung und/oder Entfernung des Elektrolyten aufweist, wobei die Anordnung von Anode, Kathode und Hohlraum mit der mindestens einen Öffnung zur Zuführung und/oder Entfernung des Elektrolyten dergestalt ist, dass zwischen Anode und Kathode ein Stromfluss durch den Elektrolyten möglich ist, wenn der Hohlraum zumindest teilweise bis vollständig mit dem Elektrolyten befüllt ist, und, wobei die Anode als Anodenmaterial Silizium umfasst, wobei der Hohlraum der Primärzelle über die mindestens eine Öffnung mit einem ersten Reservoir, das mit Elektrolyt befüllbar ist, kommuniziert, und, wobei die Vorrichtung eine Elektrolytfördereinheit aufweist, optional wobei die Vorrichtung eine Temperiereinheit zur Einstellung der Temperatur des Elektrolyten aufweist,

indem das Verfahren zum Betrieb der mindestens einen Primärzelle umfassen kann a) einen Entladeschritt in dem der Elektrolyt im Hohlraum vorliegt und b) Betrieb der Primärzelle in Leerlaufspannung,

wobei a) der Entladeschritt die Schritte umfasst
optional Einstellen der Temperatur des Elektrolyten auf eine definierte Temperatur, insbesondere auf eine Temperatur größer gleich 26 °C,

i) Zuführen oder Vorhandensein von Elektrolyt im Hohlraum, und optional Vorhandensein von Elektrolyt im ersten Reservoir,
optional Einstellen der Temperatur des Elektrolyten auf eine definierte Temperatur, insbesondere auf eine Temperatur größer gleich 26 °C,
ii) Entladen der mindestens einen Primärzelle an einer Last, vorzugsweise an einer elektronischen Last, und optional

b) Betrieb der Primärzelle in Leerlaufspannung, synonym offene Zellspannung, mit den Schritten i) Entfernen des Elektrolyten, wie Ablassen des Elektrolyten, aus dem Hohlraum, insbesondere in das erste Reservoir, und optional ii) Zuführen einer protischen Flüssigkeit die kein Elektrolyt ist, insbesondere aus einem zweiten Reservoir, in den Hohlraum.

Das Entladen der mindestens einen Primärzelle kann erfolgen, indem ein elektrischer Verbraucher oder ein Stromabnehmer oder eine elektrische Last, vorzugsweise eine elektronische Last, angeschlossen wird.

Bevorzugt wird der Elektrolyt mit einer Fördereinheit, insbesondere Elektrolytfördereinheit, ausgewählt aus einer Pumpe, wie einer Schlauchpumpe, in den Hohlraum zugeführt und/oder entfernt. Ein bevorzugtes Verfahren für den Betrieb der Primärzelle umfasst die Schritte i) und ii) wobei im Schritt i) die Fördereinheit den Elektrolyten in den Hohlraum zuführt und/oder entfernt. Im Schritt ii) kann die Fördereinheit ausgeschaltet sein. Ferner kann das Verfahren im Schritt i) eine Fließgeschwindigkeit des Elektrolyten von 0,15 bis 5,0 mL/min, insbesondere von 0,2 bis 2,5 mL/min, bevorzugt von 0,3 4 mL/min bis 2,5 mL/min aufweisen, insbesondere bei einem Volumen des Hohlraumes in der Primärzelle von größer 0,7 mL. Bevorzugt wird im Schritt i) und oder auch im Schritt ii) eine Fließgeschwindigkeit mit laminarer Strömung eingestellt. Dem Fachmann sind die Methoden zur Ermittlung laminarer Strömung geläufig.

Unter einer Elektrolytfördereinheit wird vorzugsweise eine Fördereinheit verstanden, deren innere Oberflächen einer dauerhaften alkalischen Beanspruchung, insbesondere bei einem pH-Wert im Bereich von größer 9, bevorzugt größer 11 oder größer 12, standhalten und vorzugsweise über einen Betrieb über bis zu 5 Jahre erlauben. Davon ausgenommen sind austauschbare Dichtungen. Daher kann es bevorzugt sein, wenn die inneren Oberflächen der Elektrolytfördereinheit, des Hohlraums, die Leitungen, Separator und oder andere Bauteile der Primärzelle ausgekleidet ist mit alkalibeständigen Beschichtungen, insbesondere umfassend alkalibeständige Polymere. Vorzugsweise umfassend die vorgenannten Polymere. Alternativ bevorzugt können die Leitung, der Separator und/oder andere Bauteile, insbesondere nicht elektrische Bauteile, der Vorrichtung teilweise oder vollständig aus den folgenden Materialien oder vorgenannten Polymeren sein. Bevorzugte alkalibeständige Polymere können umfassen: Polypropylen (PP), Polyethylen (PE), Cycloolefin-Co-Polymer (COC) sowie Co-Polymere dieser, Polymethylacrylat (PMMA), Polyamid12 (PA12), Polyarylether (PAEK), Polyetheretherketon (PEEK), Polyoxymethylen (POM), Polytetrafouorethylen (PTFE), Polyimid, fluorierte Polymere und/oder Co-Polymere dieser und/oder Beschichtungen umfassend diese. Besonders bevorzugt Polymere für die Beschichtung oder die Herstellung der vorgenannten Komponenten sind ungefüllte oder gefüllte Zusammensetzungen umfassend Polypropylen (PP), Polyethylen (PE), Cycloolefin-Co-Polymer (COC) sowie Co-Polymere dieser, Polytetrafouorethylen (PTFE), und/oder Gemische dieser. Als Füllstoffe kommen anorganische Füllstoffe in Betracht.

Ebenso umfasst das Verfahren für den Betrieb der Primärzelle einen Schritt b) Betrieb in Leerlaufspannung, der umfasst ii) Zuführen einer protischen Flüssigkeit in den Hohlraum, die kein Elektrolyt ist, insbesondere weist die protische Flüssigkeit einen pH-Wert von 5,5, bis 8 auf und ist bevorzugt wässrig. Das Zuführen kann vorzugsweise mittels einer Fördereinheit erfolgen. Die Fließgeschwindigkeit der protischen Flüssigkeit kann der des Elektrolyten entsprechen. Das Zuführen der protischen Flüssigkeit für den Betrieb in Leerlaufspannung kann erfolgen, indem der Elektrolyt verdünnt wird bis nur noch protische Flüssigkeit vorliegt. Alternativ kann das ii) Zuführen der protischen Flüssigkeit in den Hohlraum für den Betrieb in Leerlaufspannung satzweise, kontinuierlich, diskontinuierlich und/oder periodisch erfolgen.

Das Verfahren zum Betrieb der mindestens einen Primärzelle kann umfassen:

a) einen Entladeschritt in dem der Elektrolyt im Hohlraum vorliegt und b) Betrieb der Primärzelle in Leerlaufspannung, wobei

a) der Entladeschritt die Schritte umfasst

i) Zuführen oder Vorhandensein von Elektrolyt im Hohlraum, und optional Vorhandensein von Elektrolyt im ersten Reservoir, mit den Alternativen 1) nach dem Zuführen des Elektrolyten wird für eine Zeitspanne von 1 Minute bis 10 Stunden zunächst nicht entladen und nach Ablauf der Zeitspanne wird ii) Entladen, wobei bei einem Elektrolyten mit 0,1 mol/l Hydroxid-Konzentration, insbesondere 0,1 mol KOH die Zeitspanne 0,5 bis 10 Stunden beträgt und mit 4 bis 6 mol/l Hydroxid-Konzentration, insbesondere KOH, die Zeitspanne 1 bis 60 Minuten, vorzugsweise 10 bis 60 Minuten, beträgt. In der Alternative, dem Vorhandensein von Elektrolyt, kann jederzeit ii) Entladen werden.

Im Betrieb b) in Leerlaufspannung soll der Hohlraum für eine Elektrolytwechselzeitspanne kleiner gleich 60 Minuten, insbesondere kleiner gleich 10 Minuten, besonders bevorzugt kleiner gleich 1 Minute, entleert bleiben. Vorzugsweise liegt im Betrieb in Leerlaufspannung im Hohlraum protische Flüssigkeit vor und nur beim Vorgang des Elektrolytwechsels ist der Hohlraum für die vorgenannten Elektrolytwechselzeitspannen entleert.

Nach einer Alternative kann das Verfahren die Ermittlung des Innenwiderstandes der mindestens einen Silizium-Primärzelle oder eines Systems von größer gleich zwei Primärzellen, insbesondere bis zu 15.000 Primärzellen, besonders bevorzugt eines Silizium-Primärzellenstrangs umfassen, wobei das Verfahren zur Ermittlung des Innenwiderstandes die Schritte umfasst, und insbesondere durchgeführt wird im Entladeschritt,

1. Messen einer Spannung der Primärzelle zu einer ersten Zeit, zu der die Primärzelle nicht zu einer elektronischen Last zugeschaltet ist Messung von Uo, insbesondere im Entladeschritt ohne elektronische Last,
2. Zuschalten einer elektronischen Last, welches zu einem Stromfluss I1 führt.
3. Messung der Spannung U1,
4. Berechnen des Kurzschlussstromes Ik aus diesen Größen und Berechnung des Ri aus Uo/Ik. Ik=(Uo)*Ikl1/(Uo-

Ukl1), optional

5. dynamische und/oder kontinuierliche Wiederholung der Berechnung und optional Abschätzen der Restkapazität.

Zusätzlich kann ein Betrieb in Leerlaufspannung erfolgen. Dies ist dann vorteilhaft, wenn bspw. die Kontamination der protischen Flüssigkeit mit Elektrolyt oder Abbauprodukten über die Messung der Leitfähigkeit oder der Spannung ermittelt werden soll.

Das Verfahren zur Ermittlung des Innenwiderstandes wird vorzugsweise durchgeführt in a) einem Entladeschritt in dem der Elektrolyt im Hohlraum vorliegt und/oder im b) Betrieb der Primärzelle in Leerlaufspannung, wenn nicht protische Flüssigkeit im Hohlraum vorliegt und zwischen Anode und Kathode ein Stromfluss durch die protische Flüssigkeit möglich ist oder ein Widerstand gemessen werden kann, der von dem Widerstand des vollständig entleerten Hohlraumes abweicht.

Das Verfahren kann auch die Schritte umfassen 1. Paralleles Messen der Spannung von Primärzellen oder Gruppen von Primärzellen oder von Primärzellen eines Systems zu einer ersten Zeit, zu die Primärzellen nicht zu einer elektronischen Last zugeschaltet sind Messung von Uo, sowie Durchführen der Schritte 2 bis 5.

Ferner ist es bevorzugt, wenn die Schritte 1 bis 5 während des Entladevorgangs der Silizium-Primärzelle, des Systems umfassend Primärzellen oder eines Silizium-Primärzellenstrangs durchgeführt werden.

Vorzugsweise umfasst das Computerprogrammprodukt Befehle, die bei der Ausführung des Programms durch einen Computer diesen veranlassen, das Verfahren zur Ermittlung des Innenwiderstandes der mindestens einen Silizium-Primärzelle oder eines Systems von größer gleich zwei Primärzellen, insbesondere bis zu 15.000 Primärzellen, besonders bevorzugt einen Silizium-Primärzellenstrang, auszuführen.

Ferner kann das Verfahren für den Betrieb der mindestens einen Primärzelle umfassen

a) mindestens einen Entladeschritt mit i) Zuführen oder Vorhandensein von Elektrolyt in den Hohlraum aus dem ersten Reservoir mittels Elektrolytzuführeinheit, optional Einstellen der Temperatur, insbesondere vor dem Zuführen oder im Hohlraum,

ii) Entladen der mindestens einen Primärzelle, optional Anschließen oder Zuschalten eines Verbrauchers, und optional Einstellen der Temperatur des Elektrolyten auf eine definierte Temperatur, insbesondere auf eine Temperatur größer gleich 26 °C, und optional

b) Betrieb in Leerlaufspannung, synonym offene Zellspannung,

i) Entfernen des Elektrolyten, wie Ablassen oder Abpumpen des Elektrolyten, aus dem Hohlraum, insbesondere in das erste Reservoir, und ii) Zuführen der protischen Flüssigkeit, die kein Elektrolyt ist, vorzugsweise wobei die protische Flüssigkeit aus dem zweiten Reservoir mittels einer Zuführeinheit in den Hohlraum zugeführt wird,

iii) Entfernen der protischen Flüssigkeit, die kein Elektrolyt ist aus dem Hohlraum, insbesondere in das erste Reservoir, wobei die Schritte b) ii) und iii) kumulativ erfolgen oder ausgelassen werden, optional erfolgt in b) ii) ein Einstellen der Temperatur der protischen Flüssigkeit,

wobei die Schritte a) Entladeschritt und b) Betrieb in Leerlaufspannung abwechselnd nacheinander durchgeführt werden und vorzugsweise wiederholt nacheinander durchgeführt werden.

Als weiterer Schritt kann das Verfahren jeweils unabhängig umfassen:

a) im Entladeschritt

- iii) Entladen der mindestens einen Primärzelle, indem ein elektrischer Verbraucher an die Kathode und Anode angeschlossen wird,
- die Temperatur des Elektrolyten auf eine Temperatur größer gleich 30 °C bis unter 95 °C eingestellt wird, insbesondere wird die Temperatur des Elektrolyten auf eine Temperatur größer gleich 40 °C, vorzugsweise wird die Temperatur des Elektrolyten auf eine Temperatur größer 50 °C, besonders bevorzugt auf größer gleich 60 °C eingestellt.

Als weiterer Schritt kann das Verfahren jeweils unabhängig umfassen:

b) Betrieb der Primärzelle in Leerlaufspannung,

- indem der Stromfluss zwischen Primärzelle und elektrischem Verbraucher unterbrochen ist,

- indem i) der Elektrolyt in dem Reservoir und/oder im Hohlraum auf eine Temperatur kleiner 26 °C eingestellt wird.
- indem der Stromfluss zwischen Primärzelle und elektrischem Verbraucher unterbrochen ist.

Ferner ist Gegenstand der Erfindung ein System umfassend eine Vorrichtung, wobei die Vorrichtung größer gleich 2 Primärzellen umfasst, insbesondere bis 15.000 Primärzellen, insbesondere 2 bis 1000 Primärzellen.

Nach einer besonders bevorzugten Ausführungsform umfasst die Erfindung ein System zur Datenverarbeitung umfassend Mittel zur Ausführung des Verfahrens, insbesondere des computerimplementierten Verfahrens, insbesondere für den Betrieb der Vorrichtung umfassend die mindestens eine Primärzelle oder eines Systems umfassend die Vorrichtung.

Ferner ist Gegenstand der Erfindung ein Computerprogrammprodukt, umfassend Befehle, die bei der Ausführung des Programms durch einen Computer diesen veranlasst, das Verfahren, insbesondere als computerimplementiertes Verfahren, und/oder das Verfahren für den Betrieb der Vorrichtung oder für den Betrieb eines Systems auszuführen.

Zudem ist Gegenstand der Erfindung ein Computer-lesbares Medium, umfassend Befehle, die bei der Ausführung durch einen Computer diesen veranlassen, das Verfahren, insbesondere als computerimplementiertes Verfahren, auszuführen und/oder das Verfahren nach einem der Ansprüche für den Betrieb einer Vorrichtung oder für den Betrieb eines Systems auszuführen.

Ebenso Gegenstand der Erfindung ist eine Elektrolytzusammensetzung umfassend 2,0 bis 99,0 Gew.-% Wasser und optional 0,0001 bis 15 Gew.-% Polyalkylenoxid-Gruppen aufweisende Verbindungen oder Gemische dieser, insbesondere 0,01 bis 10 Gew.-%, bevorzugt 0,01 bis 5 Gew.-%, besonders bevorzugt 0,05 bis 2 Gew.-% und einen Gehalt von 0,001 bis 40 Gew.-% Hydroxyd-Konzentration, insbesondere Alkalihydroxid und/oder $NH_4OH$, bevorzugt KOH, insbesondere 10 bis 40 Gew.-%, in Bezug auf die Gesamtzusammensetzung von 100 Gew.-%. Optional kann die Elektrolytzusammensetzung Alkalisilikat enthalten, wobei der Gehalt vorzugsweise unter 4 Mol/Liter Alkalisilikat, bevorzugt von 0,001 bis 3,5 Mol/Liter Alkalimetallsilikat beträgt, insbesondere in der Gesamtzusammensetzung von 100 Gew.-%.

Bevorzugt umfasst die Elektrolytzusammensetzung mindestens ein Alkalihydroxid ausgewählt aus NaOH und KOH und optional weitere alkalische lösliche Salze, wie beispielsweise Erdalkalihydroxide, basische Metalloxide oder organische Basen. Bevorzugt umfasst die Elektrolytzusammensetzung ein Alkalihydroxid ausgewählt aus Kaliumhydroxid (KOH) und Natriumhydroxid (NaOH). Zweckmäßig können alternative alkalische Salze, wie Carbonate oder Metalloxide in der Elektrolytzusammensetzung eingesetzt werden. In parallelen Untersuchungen wurde festgestellt, dass die Zellspannung einer Primärzelle im Vergleich zu einem Elektrolyten mit reinem KOH in Elektrolyten mit Polyalkylenoxid-Gruppen enthaltender Verbindung vermindert ist. In diesen Versuchen wurde festgestellt, dass die Korrosionsmasse der Silizium-Anode unter sonst gleichen Bedingungen vermindert wird und die Konversionseffizienz mit Polyalkylenoxid-Verbindung erhöht ist. So können die Anoden Massenkonversionseffizienz zwischen 7,5 bis 25 % und der Entladungskorrosionseffizient zwischen von 30 bis 70 % verbessert werden (Messbedingungen: 4 h OCV + 116 h Entladung, 25 °C, 50 % rel. H.).

Zur Herstellung der wässrigen Elektrolytzusammensetzung wird vorzugsweise destilliertes Wasser eingesetzt.

Bevorzugte Primärzellen der Erfindung sind vorzugsweise frei von Lithium, wobei vorzugsweiseunter frei von Lithium verstanden wird, dass der Gehalt an Lithium im geladenen Zustand in der Primärzelle, insbesondere umfassend die Anode, die Kathode und den Elektrolyten, kleiner gleich 1 Gew.-%, insbesondere kleiner gleich 0,1 Gew.-% in der Primärzelle beträgt, vorzugsweise beträgt der Gehalt an Lithium im Elektrodenmaterial der Anode im geladenen Zustand kleiner gleich 0,1 Gew.-%. Elektrochemische Primärzellen und insbesondere Anoden für elektrochemische Prozesse mit einem Lithiumgehalt unter 1 Gew.-%, vorzugsweise kleiner gleich 0,1 Gew.-%, gelten als frei von Lithium und werden erfindungsgemäß als reine Silizium-Zellen oder reine Silizium-Anoden bezeichnet.

Des Weiteren soll ein wirtschaftliches Kathodenmaterial bereitgestellt werden, das vorzugsweise eine physikalische Mischung von Mangandioxid ($MnO_2$) und einem Leitfähigkeitsvermittler umfasst. Der optionale Gehalt des Leitfähigkeitsvermittlers in den Elektroden der Primärzelle kann in der Kathode und in der Anode unterschiedlich hoch sein. Für Mangandioxid ist ein Gehalt an Leitfähigkeitsvermittler im Material der Kathode von circa 5 bis 65 Gew.-%, bevorzugt 5 bis 15 Gew.-% üblich. Generell kann der Gehalt des Leitfähigkeitsvermittlers von 5 bis 60 Gew.-% im Material der Kathode betragen. Alternativ bevorzugt können Gehalte im Bereich von 15 bis 20 Gew.-% für einen geringeren Widerstand oder auch als Obergrenze 30 bis 60 Gew.-% sein. Dabei beträgt das Material der Kathode in Summe immer 100 Gew.-%.

Gegenstand der Erfindung ist somit mindestens eine elektrochemische Primärzelle, welche eine Anode, eine Kathode, einen Elektrolyten sowie mindestens einen Separator aufweist, wobei der mindestens eine Separator die Kathode und die Anode voneinander separiert, und die Kathode, insbesondere eine Luftkathode, umfasst als Material Mangandioxid und optional einen Kohlenstoff enthaltenden Leitfähigkeitsvermittler, wobei die Anode als Anodenmaterial Silizium umfasst und, wobei das Silizium in Form von Granulaten von Silizium-Partikeln vorliegt.

Der Separator kann umfassen eine Membran, die vorzugsweise als flexibles, faseriges und poröses Substrat, das gegen starkes Alkali und gegen Oxidation beständig ist, vorliegt. Der Separator kann ein Composite sein und kann vorzugsweise auf mindestens einem Polymer, wie Polyethylen, Polypropylen, teil- oder perfluorierte Polymere von Kohlenwasserstofffen, Polyacrylat, Lingnocellulose, Cellulose und/oder Mikrozellulose basieren. Bevorzugt sind mikroporöse Polypropylenfilme, insbesondere einer Stärke von 0,028 mm bis 0,1 mm, bevorzugt von 0,038 mm bis 0,75 mm, wobei vorzugsweise die Porosität 45 Vol.-% bis 90 Vol.-%, insbesondere von 50 bis 80 Vol.-%, bevorzugt von 55 bis 70 Vol.-% in Bezug auf das Gesamtvolumen der Membran beträgt. Ferner sind bevorzugt Nanozellulose.

Ferner kann der Separator mit einem Coating ausgerüstet sein. Die Coating- bzw. Überzugszusammensetzung des Separators umfasst beispielsweise eine Mischung aus einem polymeren Bindemittel, einem hydrolysierbaren polymeren Ester und inerten Füllstoffen. Ein geeignetes polymeres Bindemittel ist Ethylen-Propylen-Kautschuk. Ein geeigneter hydrolysierbarer Ester ist ein filmbildendes Polyacrylat. Bei den inerten Füllstoffen kann es sich unter anderem um ein in Alkali unlösliches Pigmentmaterial einschließlich Kaolin, Metalloxiden und/oder Titanaten handeln. Wenn der auf diese Weise hergestellte bzw. beschichtete Separator in den alkalischen Elektrolyten eingetaucht wird, reagiert der hydrolysierbare polymere Ester chemisch mit dem Elektrolyten unter Bildung eines polymeren Salzes und eines Alkohols. Der Alkohol geht in Lösung. Das Salz, das während der Hydrolyse gebildet wird und in dem Überzug zurückgehalten wird, dehnt sich aus durch weiteres Eindringen des Elektrolyten. Diese Ausdehnungskräfte der Polymerketten des Bindemittels führen zu einer weiteren Ausdehnung und zu einer Vergrößerung des intermolekularen Abstandes. Die in einem größeren Abstand voneinander angeordneten intermolekularen Ketten des polymeren Bindemittels ergeben eine Gesamtzunahme der Porosität des Filmüberzugs. Die daraus resultierende Zunahme der Porosität des Überzugs erlaubt eine schnellere Diffusion der Elektrolytionen durch den Separator, während sie noch eine wesentliche Sperrschicht (Sperre) für die von den Elektroden emittierten großen Ionen darstellt.

Ferner ist es bevorzugt, dass das Anodenmaterial Silizium-Partikel sowie Leitfähigkeits-vermittler umfasst, insbesondere umfasst der Leitfähigkeitsvermittler Kohlenstoff enthaltende Partikel oder eine Kohlenstoff enthaltende Paste, wie elektrisch leitfähige organische Polymere. Ein besonders bevorzugtes Anodenmaterial der Anode umfasst zu 10 bis 100,00 Gew.-%, insbesondere von 5 bis 90 Gew.-%, bevorzugt von 10 bis 95 Gew.-% Silizium-Partikel und einen Kohlenstoff enthaltenden Leitfähigkeitsvermittler, insbesondere von 5 bis 90 Gew.-%, und optional weitere Additive auf 100 Gew.-% des Anodenmaterials. Der Leitfähigkeitsvermittler umfasst vorzugsweise Kohlenstoff enthaltende Partikel, insbesondere einer Partikelgröße von 20 bis 100 nm, insbesondere 25 bis 80 nm.

Bevorzugt ist ebenfalls ein Anodenmaterial der Anode umfassend zu 20 bis 75 Gew.-%, vorzugsweise von 20 bis 60 Gew.-%, Silizium-Partikel und einen Kohlenstoff enthaltenden Leitfähigkeitsvermittler, insbesondere von 25 bis 80 Gew.-%, bevorzugt von 40 bis 80 Gew.-%, und optional weitere Additive auf 100 Gew.-% des Anodenmaterials. Der Leitfähigkeitsvermittler umfasst vorzugsweise Kohlenstoff enthaltende Partikel, insbesondere einer Partikelgröße von 20 bis 100 nm, insbesondere 25 bis 80 nm. Ein besonders bevorzugtes Anodenmaterial der Anode umfasst zu 45 bis 55 Gew.-% Silizium-Partikel und zu 55 bis 45 Gew.-% einen Kohlenstoff enthaltenden Leitfähigkeitsvermittler, wobei die Gesamtzusammensetzung des trockenen Anodenmaterials 100 Gew.-% beträgt.

Entsprechend einer bevorzugten Ausführungsvariante umfasst das Silizium, insbesondere die Silizium-Partikel, bevorzugt die amorphen Silizium-Partikel, des Anodenmaterials Dotierstoffe, wobei die Dotierstoffe ausgewählt sind aus Elementen der 13. Hauptgruppe, insbesondere umfassend Bor, Indium, Aluminium und/oder Gallium, und aus Elementen der 15. Hauptgruppe, insbesondere umfassend Phosphor, Arsen und/oder Antimon sowie Elemente der Eisengruppe, besonders bevorzugt sind Bor, Aluminium, Phosphor und/oder Eisen. Die Elemente der 13. Hauptgruppe (neue Nomenklatur: Gruppe 13 des Periodensystems) sind Elektronen-Akzeptoren neuer Nomenklatur. Als Elektronen-Donatoren werden Elemente der 15. Hauptgruppe (neue Nomenklatur: Gruppe 15 des Periodensystems) eingesetzt.

Nach einer Ausführungsform umfasst das Silizium, insbesondere die Silizium-Partikel des Anodenmaterials, Dotierstoffe, wobei die Dotierstoffe zu größer gleich 1 Element der 15. Hauptgruppe auf $10^6$ Silizium-Atome und/oder größer gleich 1 Element der 13. Hauptgruppe auf $10^6$ Silizium-Atome vorliegen, insbesondere größer gleich 1 Element der 15. Hauptgruppe auf $10^4$ Silizium-Atome und/oder größer gleich 1 Element der 13. Hauptgruppe auf $10^4$ Silizium-Atome, bestimmt mittels dem Fachmann bekannter ICP-MS Analyse (Inductive Plasma Discharge-Massenspektroskopie, welche unter Wikipedia ausführlich beschrieben ist: https://de.wikipedia.org/wiki/Massenspektrometrie_mit_induktiv_gekoppeltem_Plasma). Alternativ kann die Analyse auch durch GD-MS erfolgen (GDMS/GD-MS-Glimmentladungs-Massenspektroskopie mit Secondary Electron Multiplier- (SEM) und/oder Faraday-Detector gemäß Quelle:https://assets.thermofisher.com/TFS-Assets/CMD/brochures/BR-30066-GD-MS-ELEMENT-GD-PLUS-BR30066-EN.pdf). Den Farady-Detektor vorzugsweise für die Messungen von Spuren-Konzentrationen im %-Bereich.

Nach einer alternativen, bevorzugten Ausführungsform umfasst das Silizium, insbesondere die amorphen Silizium-Partikel, des Anodenmaterials Dotierstoffe, wobei die Dotierstoffe größer gleich $10^2$ Atome (ca. 100 Gew.-ppm, abhängig vom Atomgewicht des Dotierstoffes) der 15. Hauptgruppe auf $10^6$ Silizium-Atome und/oder größer gleich $10^2$ Atome der 13. Hauptgruppe auf $10^6$ Silizium-Atome vorliegen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich $2 \cdot 10^2$ Atome der 15. Haupt-

gruppe auf $10^6$ Silizium-Atome größer gleich 2 $10^2$ Atome der 13. Hauptgruppe auf $10^6$ Silizium-Atome vorliegen. Die vorstehenden Gehalte an Dotierstoffen im Silizium des Anodenmaterials können inhomogen im Silizium verteilt sein, sowie die Gehalte integral über die Gesamtmenge des Siliziums im Anodenmaterial im Mittel vorliegen. Zur Bestimmung obiger Gehalte wird eine Prüfmenge von 1 g Prüfmenge mittels GD-MS oder ICPMS vermessen, wobei zwischen beiden Methoden gewisse Abweichungen bestimmt werden können, vorzugsweise wird ein Mittelwert bestimmt. Entsprechend weiteren bevorzugten, alternativen Ausführungsformen umfasst das Silizium, insbesondere die amorphen Silizium-Partikel, des Anodenmaterials Dotierstoffe, wobei die Dotierstoffe größer gleich $10^3$ Atome der 15. Hauptgruppe auf $10^6$ Silizium-Atome und/oder größer gleich $10^3$ Atome der 13. Hauptgruppe auf $10^6$ Silizium-Atome betragen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich $10^4$ Atome der 15. Hauptgruppe auf $10^6$ Silizium-Atome und/oder größer gleich $10^4$ Atome der 13. Hauptgruppe auf $10^6$ Silizium-Atome umfassen.

Die Silizium-Partikel können auf atomarer Ebene eine Legierung von Silizium mit mindestens einem Element der 13. oder 15 Hauptgruppe aufweisen, wobei das mindestens ein Element der 13. oder 15. Hauptgruppe mit größer gleich $10^{19}$ Atomen/cm$^3$ ausgewählt aus mindestens einem Elektronendonator und Elektronenakzeptor vorliegt. Dabei liegt die Legierung von Silizium auf atomarer Ebene mit mindestens einem Element der 13. oder 15. Hauptgruppe als eine amorphe oder kristalline Phase vor. Besonders bevorzugt weisen die Siliziumpartikel einen Gehalt an Bor von 10 ppm-Gew bis 2,5 Gew.-% in Bezug auf den Gesamtgehalt von 100 Gew.-% des Siliziumpartikels auf, bevorzugt ist ein Gehalt von 10 ppm-Gew bis 1,8, besonders bevorzugt von 1,8 Gew.-% plus/minus 0,2 Gew.-%. Analog kann der Siliziumkörper einen Gehalt an Bor von 10 ppm-Gew bis 1,8 Gew.-% in Bezug auf den Gesamtgehalt von 100 Gew.-% des Siliziumkörpers aufweisen.

Gegenstand der Erfindung ist eine Primärzelle umfassend Silizium-Partikel, die einen Gehalt an Bor von 10 Gew.-ppm bis 1,8 Gew.-% aufweisen.

Dabei ist es weiter besonders bevorzugt, wenn die Anode, insbesondere das Anodenmaterial, insbesondere im geladenen Zustand der Primärzelle, kein Lithium umfasst, vorzugsweise keine weiteren Lithium-Ionen im Konzentrationsbereich von größer gleich 10 000 Gew-ppm, bevorzugt weniger als 1 000 Gew.-ppm aufweist. Besonders bevorzugt weist das Anodenmaterial kleiner 100 Gew.-ppm Lithium-Atome auf. Vorzugsweise weist das Anodenmaterial weniger als $10^{20}$ Lithium-Atome/cm$^3$ auf 5 $10^{22}$ Silizium-Atome/cm$^3$ auf. Des Weiteren ist es bevorzugt, wenn im KOH-Elektrolyten die Konzentration an Lithium, insbesondere Lithium-Ionen, kleiner gleich 1000 Gew.-ppm, insbesondere kleiner gleich 100 Gew.-ppm, bevorzugt kleiner gleich 10 Gew.-ppm beträgt.

Entsprechend zwei alternativen besonders bevorzugten Ausführungsformen umfasst die Kathode der Primärzelle a) als Material Mangandioxid als Kathodenmaterial, oder b) die Kathode der Primärzelle ist eine Luft-Kathode und die Kathode umfasst Manganoxid, Platin, Platin-Basis, Nickel-Kobalt-Cyanide, und/oder Silber als Katalysator im Kathodenmaterial.

Nickel-Kobalt-Cyanide stehen dabei beispielhaft für die Klasse von Nichtedelmetallkatalysatoren mit hervorragender Elektroaktivität für die Sauerstoffreduktionsreaktion in neutralen Elektrolyten. Die Zubereitung der Ni/Co-dotierten C-N-Hohl-Nanoröhren-Verbundkatalysatoren (C-N, Co/C-N, Ni/C-N und Ni-Co/C-N) erfolgt durch eine einfache Pyrolyse des Ni/Co-Salz~Dicyandiamid~Glucose~Gemenges. Eine entsprechende Silizium-Luft-Batterie wurde in einem neutralen Medium unter Verwendung der vorbereiteten Probe als Katalysator für die Luftelektrode montiert und zeigte eine gute Entladungsleistung und Stabilität.

Die Kathode umfasst vorzugsweise als Material, d.h. als Kathodenmaterial oder als Katalysator im Kathodenmaterial zur Beschleunigung der Löslichkeit von Sauerstoff, Mangandioxid. Ein bevorzugtes Kathodenmaterial für eine Kathode in einer Primärzelle mit Luftkathode umfasst vorzugsweise Manganoxid und Silber als Katalysator. Ein besonders bevorzugtes Kathodenmaterial, insbesondere für eine Primärzelle mit Luftkathode, weist eine hydrophobe Kathode auf, deren Kathodenmaterial eine Mischung aus Mangan(di)oxid, vorzugsweise einer durchschnittlichen Partikelgröße von kleiner gleich 10 μm (Mikrometer), insbesondere elektrolytisches Gamma-Mangandioxid, einen Leitfähigkeitsvermittler und einen polymeren halogenierten Kohlenwasserstoff, insbesondere einen polymeren fluorierten Kohlenwasserstoff, umfasst, insbesondere einen Polytetrafluorethylen. Die Mischung kann in Platten gepresst, getrocknet werden. Dabei wird vorzugsweise in der Primärzelle auf die der Luft ausgesetzten Kathodenseite ein mikroporöser, hydrophober Film, beispielsweise aus einem polymeren fluorierten Kohlenwasserstoff, aufgebracht.

Ein besonders bevorzugtes Kathodenmaterial für eine geschlossene Kathode umfasst zu 75 bis 85 Gew.-% Mangandioxid und zu 15 bis 25 Gew.-% einen Kohlenstoff enthaltenden Leitfähigkeitsvermittler, wobei die Gesamtzusammensetzung des trockenen Kathodenmaterials 100 Gew.-% beträgt.

Der Kohlenstoff enthaltende Leitfähigkeitsvermittler umfasst vorzugsweise Kohlenstoff enthaltende Partikel, besonders bevorzugt Graphen enthaltende Partikel. Die Kohlenstoffpartikel weisen vorzugsweise eine Partikelgrößenverteilung im Bereich von 0,1 nm bis 5 Mikrometer, bevorzugt von 5 nm bis 5 Mikrometer auf. Dabei ist es weiter bevorzugt, wenn die Kohlenstoffpartikel eine Partikelgröße im Bereich von 5 nm bis 300 nm, insbesondere von 10 nm bis 150 nm, besonders bevorzugt von 20 bis 100 nm aufweisen und optional als Agglomerate einer Größe von 100 nm bis 3 Mikrometer, vorzugsweise einer Größe von 300 nm bis 2 Mikrometer vorliegen.

**EP 4 235 867 A1**

Die Kathode und/oder die Anode weisen vorzugsweise eine Porosität auf, die bestimmt wird über Dichtemessung. Vorzugsweise beträgt die Porosität der Kathode und/oder der Anode von 18 bis 43 Vol.-% in Bezug auf das Gesamtvolumen der Kathode von 100 Vol.-%, bevorzugt von 24 bis 28 Vol.-%, besonders bevorzugt von 25 Vol.-% bis 27 Vol.-%. Die Porosität ist der Zwischenraum in der Anode und/oder der Kathode, der für den fluiden Elektrolyten verfügbar ist. Die Porosität wird ausgedrückt als prozentuales Volumen des geometrischen Gesamtvolumens der Kathode oder der Anode. Somit können die über die Porosität gebildeten Zwischenräume teilweise oder vollständig mit Elektrolyten gefüllt sein.

Porosität der Anode (Volumendichte Anodenmaterial) berechnet sich aus der Dichte der Silizium-Anode dividiert durch die Feststoffdichte von Rein-Silizium von 2,3 $g/cm^3$.

Porosität POS = 1- (Dichte Silizium-Anode in $g/cm^3$ / Festkörperdichte Silizium mit 2,3 $g/cm^3$) Bevorzugt ist eine Dichte der Siliziumanode von ~ 1,5 in $g/cm^3$ woraus sich eine Porosität POS von 1- (1,5 g/cm$^3$ / 2,3 g/cm$^3$) = 1-0,65 = 0,35 bzw. von 35% errechnet. Bevorzugte Porositäten liegen zwischen 0,01 und 0,5 bzw. zwischen 1% und 50%.

Nach gleichfalls bevorzugten Alternativen kann das Gewichtsverhältnis von Mangandioxid im Kathodenmaterial zum Elektrolyten von 2,2 bis 2,9 betragen. Alternativ oder gleichzeitig kann das Gewichtsverhältnis der Silizium-Partikel im Anodenmaterial zum Elektrolyt von 0,6 bis 1,7 betragen.

Der Kohlenstoff enthaltende Leitfähigkeitsvermittler umfasst besonders bevorzugt i) Kohlenstoff enthaltende Partikel, die umfassen Ruß, Leit-Ruß, elektrochemisch hergestellten Ruß, Elektroruß, Aktivkohle, Graphit, Graphen und/oder eine Mischung davon, und/oder ii) eine Kohlenstoff enthaltende Paste, die elektrisch leitfähige Polymere, die Heteroatome N, O und/oder S umfassen können, wie Polyanilin oder Graphen.

Es wurde überraschend gefunden, dass Elektroruß als Leitfähigkeitsvermittler wirksamer ist als Graphitpulver. Der hinreichende Anteil von Elektroruß im Anodenmaterial liegt vorzugsweise im Bereich von 50 bis 90 Gew.-% in Bezug auf die Gesamtzusammensetzung. Mit einer zwei Zellen umfassenden Batterie mit 16 cm$^2$ aktiver Elektrodenfläche konnte bereits eine Leistung ausreichend für den Dauer-Betrieb eines kleinen Lüfters über Wochen bereitgestellt werden.

In einer besonderen Variante der elektrochemischen Primärzelle liegt an der Kathode und/oder Anode vorzugsweise ein Druck von 0,01 bis 10 MPa an, bevorzugt von 0,5 bis 5,0 MPa, um das Pulvermaterial zu verdichten und den Innenwiderstand der Elektroden auf weniger 10 Ohm/cm zu reduzieren.

Gleichfalls Gegenstand der Erfindung ist ein System, insbesondere umfassend eine Vorrichtung als mehrzellige Batterie wobei die Batterie mindestens zwei bis 15.000, insbesondere 3 bis 500, bevorzugt 4 bis 100, miteinander verbundene Primärzellen umfasst, vorzugsweise sind von den zwei bis 15.000 miteinander verbundenen Primärzellen 4 bis 100 in Serie, die weiteren entsprechend parallel geschaltet. Die Batterie wird definiert nach der DIN-Norm 40729.

Des Weiteren weist der Elektrolyt vorzugsweise keine Lithium-Ionen mit einer Konzentration im Elektrolyten im Bereich oberhalb von 10 000 Gew.-ppm auf, insbesondere oberhalb von 1000 Gew.-ppm, bevorzugt oberhalb 100 Gew.-ppm auf.

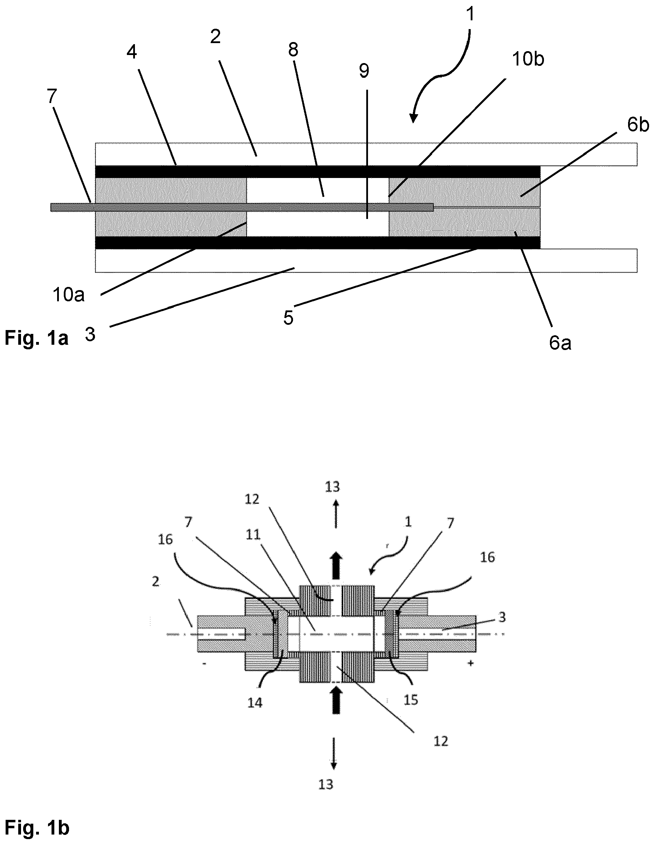

**Ausführungsbeispiele:** Eine Zelle einer Silizium-Primärbatterie wird anhand **Fig. 1a** näher erläutert: Auf eine isolierende Trägerplatte **3** (quadratische Polymerplatte 4 cm auf 4 cm) wird eine Komposit-Elektrode **5** bestehend aus einem passenden Kontaktblech aus Kupfer oder Edelstahl als Ableitelektrode, einem 4 cm mal 4 cm Nickelnetz, vorzugsweise vergoldet, als Kontaktvermittler zwischen Ableitelektrode und chemisch-inerten Elektrodenträger sowie ein chemisch-inerter Elektrodenträger (vorzugsweise ein Graphit-Polymer-Compound) aufgebracht. Darauf liegt eine 4 cm mal 4 cm Silikonplatte **6a** mit ca. 1 mm Höhe die mit einer zentrischen Aussparung **10a** (Loch) mit ca. 2,5 cm Durchmesser versehen ist. In diese Aussparung wird vorzugsweise Anodenmaterial **9** (Siliziumgranulat oder Pasten-Gemisch aus Siliziumpulver, Leitruß, Wasser, Benetzungsmittel und Elektrolyt) einfügt oder -gestrichen. Hierauf wird ein Separator **7** (z.B. Fließpapier) gelegt, der mit einer Fahne über die 4 cm mal 4 cm große Fläche hinausragt. Auf diesem liegt eine weitere 4 cm mal 4 cm Silikonplatte **6b** mit ca. 1 mm Höhe die mit einer zentrischen Aussparung **10b** (Loch) mit ca. 2,5 cm Durchmesser versehen ist. Darin wird nun das Kathodenmaterial **8** eingestrichen (Pasten-Gemisch aus Mangandioxidpulver, Leitruß, Wasser, Katalysator, Benetzungsmittel und Elektrolyt). Darauf liegt nun die eine weitere Komposit-Elektrode **4** bestehend aus chemisch-inertem Elektrodenträger (vorzugsweise ein Grafit-Polymer-Compound), 4 cm mal 4 cm Nickelnetz, vorzugsweise vergoldet, als Kontaktvermittler zwischen Ableitelektrode und chemisch-inertem Elektrodenträger und ein passendes Kontaktblech aus Kupfer oder Edelstahl als Ableitelektrode oben aufliegend. Darauf liegt eine weiter isolierende Trägerplatte **2** (quadratische Polymerplatte 4 cm mal 4 cm). Dieser sogenannte Sandwichaufbau einer Silizium-Primärzelle **1** kann in einer Schraubstock-Anordnung miteinander verspannt werden.

Der prinzipielle Aufbau einer bevorzugten Variante der Primärzelle ist in **Figur 1b** dargestellt. Die Primärzelle weist eine Anode **14** aus Silizium (und eine Luftkathode **15** auf. Die Anoden können gebildet sein aus Silizium-Wafer-Plättchen, Silizium-Granulat-Tablette, verdichteter Pulver-Granulat-Tablette etc. Zwischen Anode **14** und Kathode **15** ist ein Hohlraum **11** zur Aufnahme eines Elektrolyten von ca. 0,6 ml. Die effektive Elektrodenfläche für eine nicht poröse Anodenfläche beträgt ca. 0,44 cm$^2$ (Kreis mit Radius 0,375 cm).

**Fig. 1b** stellt eine Zellanordnung einer Primärzelle dar. Jeweils über eine Leitung **12** ist die Zuführung als auch die Abführung des Elektrolyten mit einem Reservoir **13** vorgesehen. **2** und **3** stellen Kontaktelektroden dar. Zwischen Kontaktelektrode **2** und Anode **14** ist ein Ableit-Kontakt-Stütz-Feder-Netz **16** das für einen stabilen, flächigen elektrischen Kontakt zwischen Kontaktelektrode **2** und Anode **14** bzw. zwischen Kontaktelektrode **3** und Kathode **15** sorgt. Bei Verwendung einer Luftkathode **15** ist die zugehörige Kontaktelektrode **3** als Hohlelektrode ausgeführt, damit Luft bzw. Sauerstoff an die Luftkathode gelangen kann. An der Kontaktelektrode **2** ist beispielhaft eine Bohrung dargestellt über die ein Kabel zur Stromableitung (Schraube mit Kabelöse) angeschlossen werden kann. Werden Anode und /oder Kathode mit Pasten befeuert, dann trennt die Anode bzw. die Kathode ein Separator. Die Kontaktelektroden **2** und **3** bestehen aus elektrisch leitfähigen Materialen bspw. Graphit-Polymer-Compounds. Diese sind in den Batteriekörper, der aus isolierendem und korrosionsfestem Material z.B. PEEK oder Plexiglas besteht eingeschraubt bzw. eingelassen. Die Kontaktelektroden **2** und **3** drücken auf das Ableit-Kontakt-Stütz-Feder-Netz **16,** das wiederum auf die Anode **14** bzw. Kathode **15** drückt, welche wiederum vom Elektrolytkörper **12** mit den Hohlringen **7** einen Gegendruck erfahren. Das Ableit-Kontakt-Stütz-Feder-Netz **16** kompensiert die mechanischen Spannungen, die an der Silizium-Anode bzw. der (Luft-) Kathode auftreten. Das Reservoir **13** ist nicht dargestellt und kann ein zweiter Hohlraum in Form eines Behälters mit oder ohne Pumpe sein.

Zur Reduzierung der Korrosion des Siliziums des Anodenmaterials durch den wässrigen alkalischen Elektrolyten wurde der Elektrolyt durch Wasser ausgetauscht und der Effekt auf die offene Zellspannung, die notwendige Zeit zwischen einem Elektrolytwechsel zur Wiederherstellung der vorherigen offenen Zellspannung sowie auch das Verhalten während des Elektrolytwechsels untersucht. Verschiedene Verbindungen wurden auf ihre, die Korrosion von Silizium inhibierenden Eigenschaften, in einem alkalischen Elektrolyten ohne und mit Entladung untersucht.

Batterieversuche **A**: Silizium-Waferplättchen als Silizium Anoden in wässriger 5 molarer KOH und in Wasser (dest.) (=Wässriger Elektrolyt)

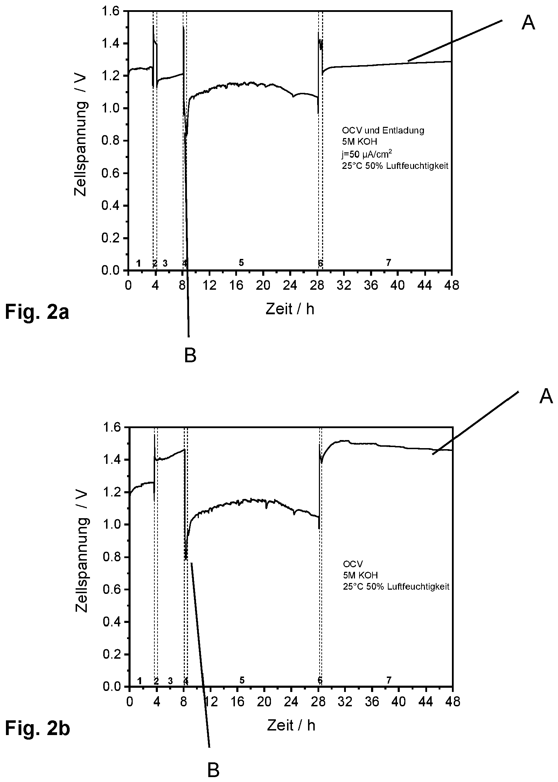

Die Figuren 2a bis 2d stellen dar die Zellspannung (V) einer Primärzelle (Fig. 1b) mit einem wässrigen Elektrolyten mit 5M KOH und Wasser, an denen der erfindungsgemäße Elektrolytwechsel durchgeführt wird. Gemessen wird die offene Zellspannung (OCV: open circuit Voltage) und die Zellspannung bei Stromentnahme mit 50 $\mu$A/cm$^2$ (25 °C, 50% rel. Luftfeuchtigkeit Anodenfläche ~ 0,44 cm$^2$) zu wechselnden Bedingungen, die in den nachfolgenden Tabellen 1 und 2 und den Figuren 2a bis 2d dargestellt sind. Die Figuren zeigen, dass die Korrosionsmasse vermindert wird und die Konversionseffizienz mit dem Programm 1 vermindert ist. Eine konstantere Spannung wird ab dem zweiten Elektrolytwechsel erhalten.

**Tabelle 1: Programm 1 an Zelle 1 (OCV und Entladung) und Zelle 2 (OCV)**

| Schritt/ Phase | Programm 1 | | |
|---|---|---|---|
| | Zeit | **Zelle 1** | **Zelle 2** |
| 1 | 3:30 h | OCV mit H$_2$O | OCV mit H$_2$O |
| 2a* | 0:10 h | H$_2$O raus / KOH rein* | H$_2$O raus / KOH rein |
| 2b* | 0:30 h | OCV mit KOH | OCV mit KOH |
| 3 | 4:00 h | Entladung mit KOH | OCV mit KOH |
| 4 | 0:25 h | Spülen mit H$_2$O (4.5 mL/min) | Spülen mit H$_2$O (4.5 mL/min) |
| 5 | 19:30 h | OCV mit H$_2$O | OCV mit H$_2$O |
| 6a* | 0:10 h | H$_2$O aus / KOH rein | H$_2$O aus / KOH rein |
| 6b* | 0:30 h | OCV mit KOH | OCV mit KOH |
| 7 | 20:00 h | Entladung mit KOH | OCV mit KOH |
| *2a und 2b stellen die Anfangs- und Endpunkte der Phase 2, 6a und 6b stellen die Anfangs- und Endpunkte der Phase 6 in den Fig. 2a und 2b dar. H$_2$O aus/KOH rein: Austausch H$_2$O gegen KOH. Die Phasenzuordnung erfolgt an der Innenseite der Zeitachse im Diagramm nach Fig. 2a und Fig. 2b. | | | |

**Fig. 2a** zeigt die Zellspannung der Zelle 1 aus Tabelle 1 über 48 Stunden Zeitdauer. Wässrige 5M KOH als Elektrolyt wurde gegen H$_2$O dest. (als Elektrolytwechsel.) und umgekehrt gemäß den zeitlichen Angaben in Tabelle 1 ausgetauscht. Die Zelle wurde insgesamt 24 Stunden unter Last sowie 24 Stunden lastfrei betrieben. Batterie-Entladung erfolgte in Phase 3 über 4 Stunden und in Phase 7 über 20 Stunden (Bedingungen 25 °C, 50% relative Luftfeuchtigkeit). **(A)** in Fig. 2a zeigt die erfolgte Belastung bzw. den Spannungsverlauf in Phase 7 bei einer spezifischen Stromdichte von 50 $\mu$A/cm$^2$. Analoge Belastung und Entladung über 4 Stunden erfolgte auch in Phase 3. Die Zellspannung unter gleicher Last ist in Phase 7 (zweiter Entladezyklus) gegenüber dem ersten Entladezyklus (Phase 3) erhöht. Demgegenüber ist die offene Zellspannung in der Phase 5 deutlich geringer als in der ersten Phase 1. **(B)** in Fig. 2a zeigt, dass beim Wechsel von H$_2$O zu wässriger KOH die offene Zellspannung (OCV) ebenso ansteigt, wie beim erfolgten Spülen mit 4.5 mL/min $H_2O$ in Phase 4.

**Fig. 2b** zeigt die Zellspannung der Zelle 2 aus Tabelle 1 über 48 Stunden Zeitdauer. Wässrige 5M KOH als Elektrolyt wurde gegen $H_2O$ dest. (als Elektrolytwechsel.) und umgekehrt gemäß den zeitlichen Angaben in Tabelle 1 ausgetauscht. Die Zelle wurde insgesamt 48 Stunden lastfrei betrieben. Die offene Zellspannung (OCV) in der Phase 5 ist deutlich geringer als in den anderen Phasen 1 bis 4 und 7. **(B)** in Fig. 2b zeigt, dass beim Wechsel von $H_2O$ zu wässriger KOH die offenen Zellspannung (OCV) ebenso ansteigt, wie beim erfolgten Spülen mit 4.5 mL/min $H_2O$ in Phase 4. Die Zellspannungsverläufe in Fig. 2b sind vergleichbar zu den Zellspannungsverläufen in Fig. 2a in den Phase 1, 2, 3, 4 und 5. Fig. 2b zeigt die offene Zellspannung ohne Entladung. in Phase 7 **(A)** liegt wässriger KOH in der Zelle vor. Die Zellspannung ist in Phase 7 gegenüber dem ersten OCV Zyklus in Phase 3 erhöht. Demgegenüber ist die offene Zellspannung (OCV) in der Phase 5 in $H_2O$ deutlich geringer als in der ersten Phase 1. Beim Wechsel von $H_2O$ zu wässriger KOH steigt die OCV an, während sie beim nachfolgenden **(B)** Spülen mit $H_2O$ mit 4.5 mL/min in Phase 4 deutlich absinkt.

**Tabelle 2: Programm 2 der Zellen 3 (OCV und Entladung) und 4 (OCV)**

| Schritt/ Phase | Programm 2 | | |
|---|---|---|---|
| | Zeit | Zelle 3 (OCV und Entladung) | Zelle 4 (nur OCV) |
| 1 | 3:30 h | OCV mit $H_2O$ | OCV mit $H_2O$ |
| 2a* | 0:10 h | $H_2O$ raus / KOH rein* | $H_2O$ raus / KOH rein |
| 2b* | 0:30 h | OCV mit KOH | OCV mit KOH |
| 3 | 4:00 h | Entladung mit KOH | OCV mit KOH |
| 4 | 0:25 h | Spülen mit $H_2O$ (4.5 mL/min) | Spülen mit $H_2O$ (4.5 mL/min) |
| 5 | 15:30 h | OCV mit $H_2O$ | OCV mit $H_2O$ |
| 6a* | 0:10 h | $H_2O$ raus / KOH rein | $H_2O$ raus / KOH rein |
| 6b* | 0:30 h | OCV mit KOH | OCV mit KOH |
| 7 | 4:00 h | Entladung mit KOH | OCV mit KOH |
| 8 | 0:25 h | Spülen mit $H_2O$ (4.5 mL/min) | Spülen mit $H_2O$ (4.5 mL/min) |
| 9 | 3:30 h | OCV mit $H_2O$ | OCV mit $H_2O$ |
| 10a | 0:10 h | $H_2O$ raus / KOH drin | $H_2O$ raus / KOH drin |
| 10b | 0:30 h | OCV mit KOH | OCV mit KOH |
| 11 | 16:00 h | Entladung mit KOH | OCV mit KOH |
| *2a und 2b stellen die Anfangs- und Endpunkte der Phase 2, 6a und 6b stellen die Anfangs- und Endpunkte der Phase 6 in den Figuren 2a und 2b dar. $H_2O$ raus/KOH rein: Austausch $H_2O$ gegen KOH | | | |

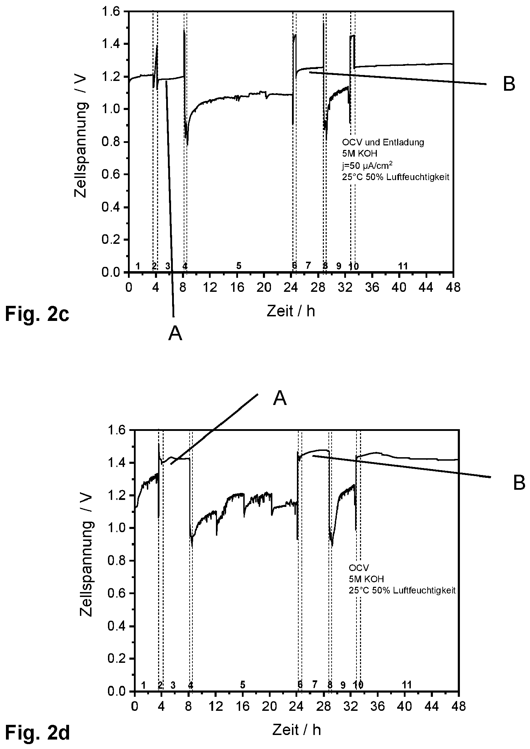

**Fig. 2c** zeigt den Zellspannungsverlauf der Zelle 3 über 48 Stunden mit Elektrolytwechsel. Dazu wurde wässrige 5M KOH gegen $H_2O$ (dest.) gemäß den Angaben der Tabelle 2 und umgekehrt ausgetauscht. Über insgesamt 24 Stunden wurde die Zelle mit Stromentnahme belastet: Zu jeweils 4 Stunden in Phase 3 und 7 und einmal zu 16 Stunden in Phase 11. Die Belastung bzw. Entladung der Zelle erfolgte mit einer spezifischen Stromdichte von 50 $\mu A/cm^2$, bei 25 °C Umgebungstemperatur und bei 50% relativer Luftfeuchtigkeit. Die Zellspannungen bei Entladung in Phase 3 sind in Fig. 2c mit **(A)** und in Phase 7 mit **(B)** gekennzeichnet. Die Zellspannung **(B)** ist in der zweiten Phase 7 gegenüber dem ersten Entladezyklus in Phase 3 erhöht. Demgegenüber ist die offene Zellspannung in der Phase 5 deutlich geringer als in der ersten Phase 1. Beim Wechsel von $H_2O$ zu wässriger KOH steigt die OCV in den Phasen 2a und 6a ebenso an, wie zu Beginn des Spülens mit $H_2O$ mit 4.5 mL/min in den Phasen 4 und 8, wobei die OCV dann abfällt.

**Fig. 2d**: zeigt den Zellspannungsverlauf der Zelle 4 über 48 Stunden mit Elektrolytwechsel. Dazu wurde wässrige 5M KOH gegen $H_2O$ (dest.) gemäß den Angaben der Tabelle 2 und umgekehrt ausgetauscht. Über insgesamt 48 Stunden mit dynamischen Elektrolytwechsel erfolgte keine Leistungsentnahme, weshalb die Zellspannnung hier synonym mit der offenen Zellspannung bzw. (OCV) zu verstehen ist. Die Zelle 4 wurde wie die anderen Zellen bei 25 °C Umgebungstemperatur bei 50% relativer Luftfeuchtigkeit betrieben. Fig. 2d zeigt den zeitlichen Verlauf der offenen Zellspannung, OCV. Die OCV mit KOH-Elektrolyt in Phase 3 ist mit **(A)** und in Phase 7 mit **(B)** gekennzeichnet. Die Zellspannung ist in Phase 7 gegenüber Phase 3 erhöht. Demgegenüber ist die Zellspannung in der Phase 5 deutlich geringer als in der ersten Phase 1. Beim Wechsel von $H_2O$ zu wässriger KOH steigt die Zellspannung in den Phasen 2a und 6a ebenso an. Beim Spülen mit $H_2O$ mit 4.5 mL/min in den Phasen 4 und 8 fällt die Zellspannung ab, wogegen sie beim zusätzlichen Spülen (3 zusätzliche Spülgänge) in Phase 5 ein Anstieg der OCV zu beobachten ist. Möglicherweise sind das Lösungsvorgänge von $SiO_2$ in das Reinstwasser, denn die Löslichkeit bewegt sich im Bereich 20 mg/Liter.

Zu den vier zuvor beschriebenen und betriebenen Zellen wurden die Massenverluste der Anode in den zwei zeitlich unterschiedlichen Programmen bestimmt und einerseits dem Masseverlust durch Stromentnahme gegenübergestellt. Dabei sind

$m_{corr}$: der Massenverlust durch Korrosion
(Ermittelt durch Auswaage Anode minus aus Stromentnahme berechneter Masseverlust).
mtot: der Gesamtmassenverlust durch Korrosion bzw. Korrosion + Entladung
(Ermittelt durch Auswaage Anode nach 48 h Betrieb)
$m_{dis}$: der Massenverlust durch Entladung
(Ermittelt aus Strommenge: 22 MikroA*24h = 1,9 As; 1,9 As dividiert durch die Elementarladung $1,6*10^{-19}$ As ergibt entsprechend $1,18*10^{19}$ Elementarladungen. Je Silizium-Atom werden 4 Elementarladungen umgesetzt, woraus sich $\sim 2,97*10^{18}$ Siliziumatome ergeben. Division dieser Teilchenzahl durch Avogadokonstante ($\sim 6*10^{23}$ Teilchen/mol) und multipliziert mit der Molmasse des Siliziums ($\sim 28$ g/mol) ergibt eine Masse von 0,139 mg)

$$m_{corr} = m_{tot} - m_{dis} = m_{tot} - \frac{\text{praktische Entladekapazität}}{\text{theoretische Kapazität}}$$

Die folgende Tabelle 3 gibt einen Überblick dazu.

**Tabelle 3:** Gegenüberstellung der Anoden Massenkonversionseffizienz

| Programm | Zelle 0,44 cm² Elektrodenfläche, 22 $\mu$A Stromentnahme bei Belastung (spezifisch 50 $\mu$A/cm²) | | Anode Massenverlust in mg (in 48 Stunden) | $M_{dis}$ Anoden Massenverlust in mg unter Stromentnahme 24 Stunden) | Gesamt Anoden Massenkonversionseffizienz in % | Anoden Stromeffizienz $m_{dis}$/ ($m_{corr1}$-$m_{corr2}$) bzw. $m_{dis}$/ ($m_{corr3}$-$m_{corr4}$) in % |
|---|---|---|---|---|---|---|
| Programm 1 | Zelle 1 | OCV und Entladung | 5.39 | 0,139 | 0,139/5,39= 0,0257 ~2,6% | 0,139/(5,39-4,58) = 0,172 ~17,1% |
| | Zelle 2 | OCV | $m_{corr}$ = 4.58 | 0 | 0 | 0 |
| Programm 2 | Zelle 3 | OCV und Entladung | 5.53 | 0,139 | 0,139/5,53= 0,025 ~2,5% | 0,139/(5,53-5,41) = 1,158 ~116 % |
| | Zelle 4 | OCV | $m_{corr}$ = 5.41 | 0 | 0 | 0 |
| $\mu$A = MirkoAmpere | | | | | | |

$$\text{Anoden Massenkonversionseffizienz} = \frac{m_{\text{dis}}}{m_{\text{dis}} + m_{\text{corr}}} \cdot 100\%$$

Bei gleicher Entladezeit ist die Massenkonversionseffizienz der Anode für das Programm 2 bei einer Entladung über 24 h gegen über dem Programm 1 nahezu gleich. Die so berechnete Anoden-Stromeffizienz verbessert sich jedoch im Programm 2 um das 6-fache.

Aus den gemessenen Elektrolytströmen der Figuren 2a bis 2d wird deutlich, dass die linearsten Ströme mit nach mehreren Elektrolytwechseln in der Phase 7 der Zelle 1 und den Phasen 7 und 11 der Zelle 3 gemessen werden.

Auch die Phasen 6a/6b und 1a/10b der Zelle 3, denen bereits Elektrolytwechsel vorausgegangen sind zeigen lineare bzw. rechteckige Spannungsverläufe.

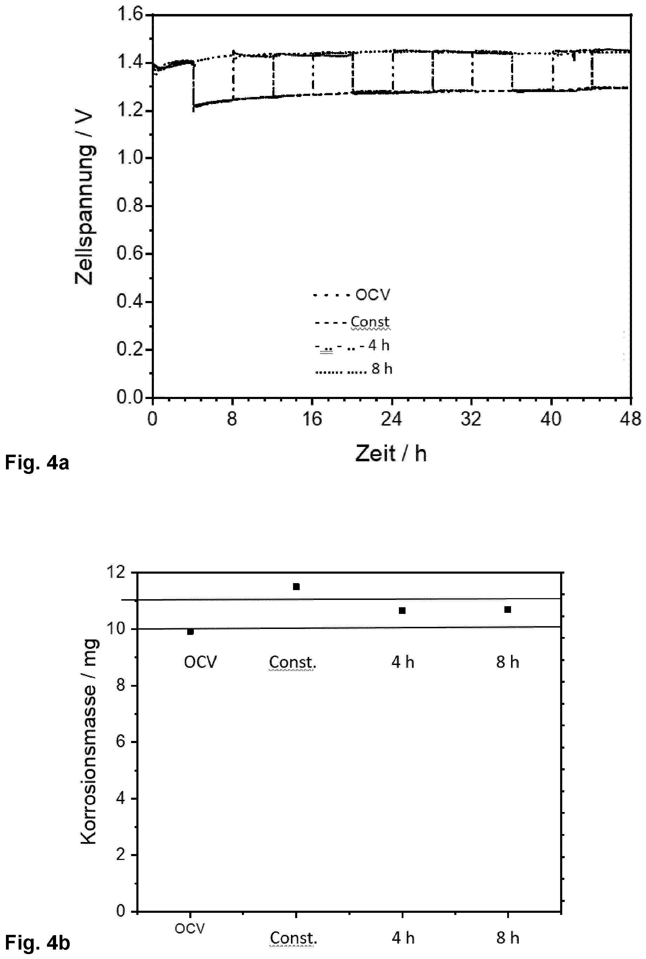

Der wesentliche positive Effekt des erfinderischen Elektrolytmangements zeigt sich sehr deutlich gegenüber den Korrosionsverlusten einer Zelle mit 5 Molarer KOH, die rund 9,9 mg über 48 Stunden unter Elektrolyt betragen (Zelle OCV in **Fig. 4a** sowie Spalte OCV in **Fig. 4b**). Diese Versuche belegen, dass sich die Korrosionsverluste durch Elektrolytaustausch bei lastfreien Betriebszeiten erheblich reduziert werden (von ~ 9,9mg auf 5 [Mittelwert aus Zelle 2 und Zelle 4 gemäß Tabelle 3).

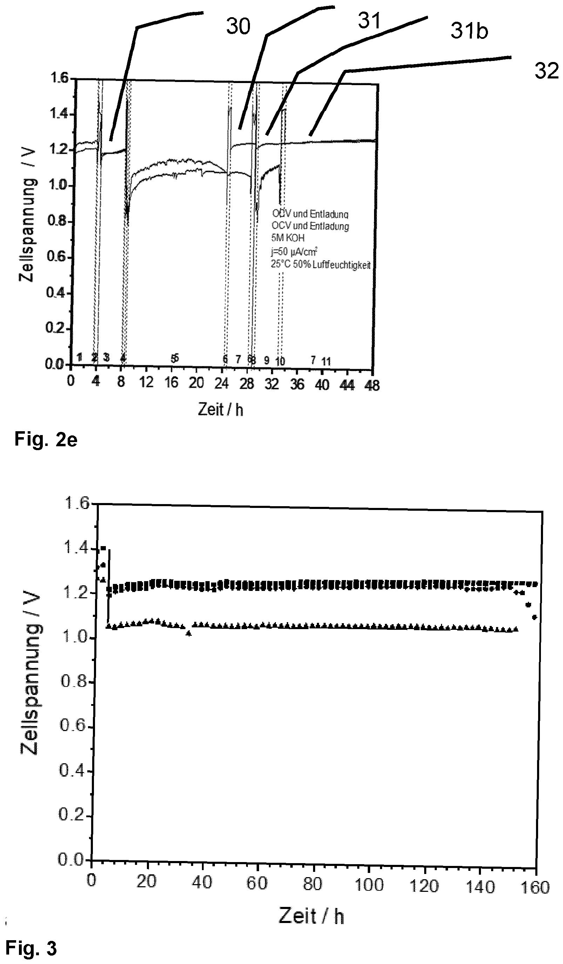

In **Fig. 2e** sind **Fig. 2a** und **Fig. 2c** zusammen dargestellt. Es ist zu erkennen, dass das Elektrolytmangement überraschend dazu führt, dass die Zelle ein Verhalten zeigt, als würde sie permanent (kontinuierlich: Aneinanderreihung der Kurvenabschnitte 30 +31a + 31b und 32 in **Fig. 2e**) unter Last betrieben (trotz Stillstände über 24 Stunden). Im Vergleich zu "keinem Elektrolytmanagement" werden die Stillstandverluste im Vergleichs-Beispiel um ~ 5mg bzw. über 90% reduziert. Ferner wird der Batteriezustand bis zum nächsten Lastabruf konserviert wobei dabei die über die Betriebsdauer stetig steigende Zellspannung als weiterer Vorteil belegt wird (0,05 V über 20 Stunden; das entspricht bei 1,2 Zellspannung einer Leistungssteigerung von 4%).

In **Figur 3** wird der Einfluss des Dotierstoffes auf die Entladespannung bei 50 $\mu$A/cm$^2$ (25 °C, 50% rel. Luftfeuchtigkeit) für As100 (Arsen, 100-Ebene kristalliner Si-Wafer) und Sb100 (Antimon, 100-Ebene kristalliner Si-Wafer) sowie für B100 (Bor, 100-Ebene Si-Wafer) 25 $\mu$A/cm$^2$ (25 °C, 50% rel. Luftfeuchtigkeit).

**Figuren 4a** und **4b** stellen den Einfluss einergepulsten Entladung dar. Fig. 4b: Einfluss dergepulsten Entladung auf die Anoden Massenkonversionseffizienz (%). Aus den Figuren 4a und 4b wird ersichtlich, dass die Anoden Massenkonversionseffizienz (%) bei konstanter Entladung höher ist als bei gepulster Entladung. Die Korrosionsmassen bei gepulster Entladung über 4 Stunden und 8 Stunden sind vergleichbar, wie auch die darüber ermittelte Massenkonversionseffizienz. Bei gepulster Entladung können nach etwa 3 Pulsen bei einer Entladung mit 4 Stunden Pulsen die linearsten Zellspannungen (rechteckige Zellspannungskurven) erhalten werden.

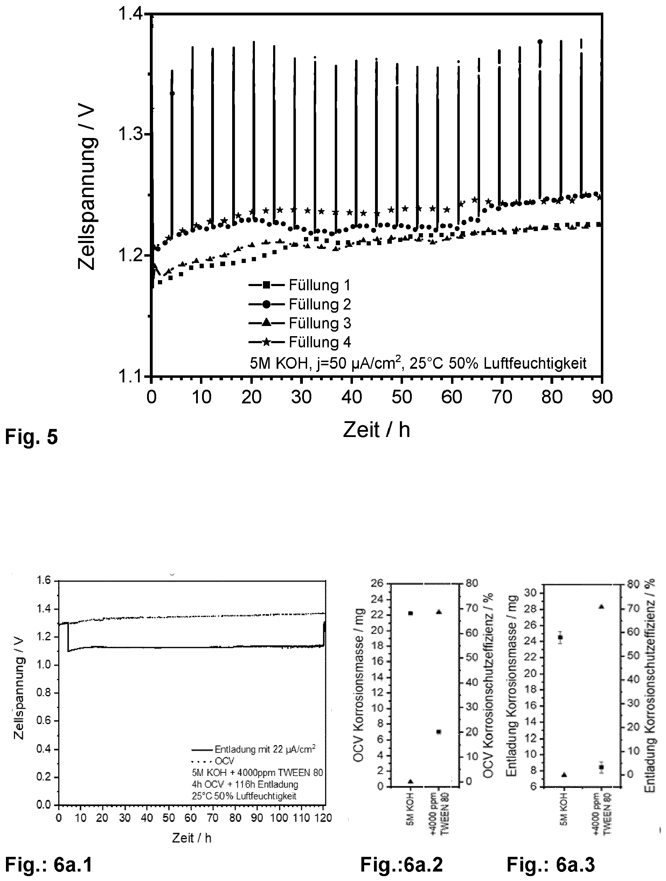

Fig. 5: Einfluss der Art der Einspeisung des Elektrolyten während der Entladung oder während der einen Phase mit offener Zellspannung. In Figur 5 stellen dar:

Füllung 1: Einspeisung des Elektrolyten mit einer Fließgeschwindigkeit von 0.1 mL/min, mit Zyklen zu je 4 Stunden Pumpe aus und 5 Minuten Pumpe an (0.1 mL/min) über insgesamt 90 Stunden.

Füllung 2: Einspeisung des Elektrolyten während OCV, die Entladung ist für 5 Minuten beendet während der Einspeisung des Elektrolyten Pumpe ist 4 Stunden ausgeschaltet und für 5 Minuten mit einer Fließgeschwindigkeit von 0,1 mL/min angeschaltet über insgesamt 90 Stunden.

Füllung 3: Einspeisung des Elektrolyten, während die Zellspannung konstant gehalten wird. Die Entladespannung wurde für 5 Minuten während der Einspeisung des Elektrolyten (Pumpe 1,0 mL/min) konstant gehalten. Die Pumpe war für 4 Stunden ausgeschaltet und 5 Minuten angeschaltet über insgesamt 90 Stunden.

Füllung 4: Kontinuierliche Einspeisung des Elektrolyten während der Entladung über 90 Stunden mit einer Fließgeschwindigkeit von 0,1 mL/min.

Die **Figur 5** zeigt, dass die Spannung beim Entladen gemäß dem Betrieb der Zelle nach dem Programm Füllung 2, d.h. Einspeisung während der OCV Phase oder bei kontinuierlicher Einspeisung während einer Entladung am höchsten ist.

**Figur 3** zeigt die Spannungsverläufe von dotiertem Silizium mit einer 100-Kristallausrichtung. Die Spannungsverläufe zeigen mit Ausnahme des Bor-dotierten keine besonderen Unterschiede in der Zellspannung gegenüber den zuvor vorgestellten Beispielen aus Programm 1 und 2 (Tabelle 1,2,3 in Verbindung mit Fig 2a, 2b, 2c, 2d, 2e). Überraschender Weise wurde aber festgestellt, dass das Silizium Anodenmaterial mit einer Bor- und Antimon Dotierung eine höhere spezifische Stromdichte zeigt. Der Massenverlust bei den Zellen mit Bor- dotiertem Silizium-Wafer als Anode betrug mehr als 38 mg Silizium bei rund 150 Betriebsstunden (Zellspannung Sb100 bricht bei 150 h ein, B100 bricht ab, da die Silizium-Wafer-Anode inhomogen "durchkorrodierte". Bezogen auf 24 Stunden entspricht das einem spezifischen Massenverlust von ca. 6,08 mg an der Anode (38mg*24h/150h). Tabelle 3 weist mit Zelle 2 und 4 Vergleichswerte um 4,58 mg und 5,41 mg aus. In einem solchen Fall ist der Nutzen des vorgeschlagenen Elektrolytmanagements nochmals verbessert und ermöglicht überhaupt, dass die Maßnahmen einer Stromdichtesteigerung z.B. durch Dotierung, ihre Wirkung entfalten können, da diese im vorliegenden Beispielfall mit einer erhöhten Korrosionsrate bei Lastfreiheit unter KOH einhergehen.

Figuren 4a und 4b dokumentieren drei Modi an dynamischer Belastung der Silizium-Primär-Zelle und deren Korrosionsverhalten. Auch hier wurden Zellen mit einer Elektrodenfläche von 0,44 cm$^2$ verwendet. Daraus ergibt sich für die Entladung ein Laststrom von 22 MikroAmpere [mA] (50 MikroA/cm$^2$, bei 0,44cm$^2$entspricht dies 22 MikroA, ebenfalls bei 25°C und 50% rel. Luftfeuchte). Kurve "OCV" (Zyklus a) zeigt die Zellspannung im lastfreien Modus über 48 Stunden Betrieb. Kurve "const." zeigt die Zellspannung unter konstanten Entladungsmodus über 48 Stunden Betrieb. Kurve "4h" zeigt die Zellspannung abwechselnd unter 4 Stunden Entladungsmodus und 4 Stunden lastfreiem Modus über 48 Stunden Betrieb. Kurve "8h" zeigt die Zellspannung abwechselnd unter 8 Stunden Entladungsmodus und 8 Stunden lastfreiem Modus über 48 Stunden Betrieb. Alle Versuchszellen wurden konstant mit 22 MikroAmpere belastet (0,44 cm$^2$ Elektrodenfläche, 50 MikroAmpere/cm$^2$ spezifische Stromstärke).

Figur 4b zeigt die dazu ausgewogenen Massenverluste der Silizium-Wafer-Anoden: 9,9mg Korrosionsverluste im lastfreien Betrieb, 11,5 mg bei Dauerlast sowie 10,6mg und 10,7mg im 4 bzw. 8 stündigen Lastwechselbetrieb (gepulst). Die Beispiele zeigen, dass die Belastung der Silizium-Primärzelle zu einem Mehrverbrauch an Silizium von rund 1,6mg auf 48 Stunden Betriebszeit führt (const: 11,5 mg minus OCV: 9,9mg ergibt 1,6mg Differenz). Die Masse, die durch Stromabnahme verbraucht wird beträgt circa 0,276mg (22 MikroAmpere für48 Stunden). Die Anoden-Massenkonversionseffizienz berechnet sich dann mit 0,276mg/1,6 mg auf 0,173 dies entspricht circa 17% entspricht.

Im 4-h-gepulsten Betrieb beträgt der Mehrverbrauch ~0,7mg (4h: 10,6mg minus OCV: 9,9mg ergibt 0,7mg). Die Anoden-Massenkonversionseffizienz berechnet sich dann mit 0,138mg/0,7 mg auf 0,173 was circa 20% entspricht.

Im 8-h-gepulsten Betrieb beträgt der Mehrverbrauch circa0,8mg (4h: 10,7mg minus OCV: 9,9mg ergibt 0,8mg). Die Anoden-Massenkonversionseffizienz berechnet sich dann mit 0,138mg/0,8 mg auf 0,173 das entspricht circa17%. Die Beispiele dokumentieren, dass eine Grundkorrosion in allen vier Zyklen von rund 10mg auf 48 Stunden besteht. Tauscht man nun in den lastfreien Zeiten den Elektrolyt aus, dann reduzieren sich die Korrosionsverluste um 50% bei gepulstem Betrieb (hier 4 bzw. 8 Stunden an Last, 4 bzw. 8 Stunden lastfrei: [4/8 bzw. 16/8 = 0,5 größer gleich 50% Modulationsgrad] Eine Periode besteht aus dem Puls (t1) und der Pause (t2). Der Modulationsgrad wird im Tastverhältnis der Pulslänge (t1) zur Periodendauer (T=t1+t2) in Prozent ausgedrückt.)

Figur 5 belegt mit den 4 Beispielen die Vorteile des Elektrolytmanagements: Das Beispiel nach Kurve "Füllung 4" belegt, dass ein kontinuierlich umgewälzter Elektrolyt die höchsten Spannungswerte der Zelle im Lastfall liefert.

Batterieversuche B: alkalischer Elektrolyt mit Silizium-Partikel-Plättchen als Silizium Anoden. Es wurden auch Primärzellen mit Silizium-Partikeln, die zu Plättchen gesintert wurden, hergestellt und damit Belastungsversuche mit und ohne Elektrolytmanagement durchgeführt.

Der prinzipielle Aufbau der Primärzelle dazu ist in Figur 1b dargestellt. Die Silizium-Anode hat im folgenden Beispiel eine effektive Elektrodenfläche von ~4,5 cm$^2$ (Durchmesser 2,4 cm). Zur Herstellung der Anode wurde Siliziumpulver auf eine Dichte von 1,1g/cm$^3$ (Tabelle 5: Silizium-Pulver D) verdichtet und polykristallin zu einer Scheibe gesintert. Die Verdichtung erfolgte durch das dem Fachmann bekannte Sparksintern. Als Luftkathode 15 wurde eine kommerzielle Luftkathode - sogenannte Gasverzehrkatode (GVK z.B. von Gaskatel oder Covestro mit Silber-Mangandioxid-Katalysator) verwendet. Der Hohlraum 11 zur Aufnahme eines Elektrolyten hatte ein Volumen von ca. 8 ml und wurde kontinuierlich mit 10 ml/h umgewälzt. Die effektive Elektrodenfläche beträgt jeweils ca. 4,5 cm$^2$ (Kreisfläche mit Durchmesser 2,4 cm).

Tabelle 4 zeigt die Ergebnisse der Belastungsversuche mit diesem Silizium-Anodentyp mit und ohne Elektrolytmanagement. Zelle EM 12 ist das Vergleichsbeispiel ohne Elektrolytmanagement: über 5 Stunden wurde die Zelle mit ~6600 MikroAmpere je cm$^2$ belastet. Die Zellspannung betrug 0,6 V, die OCV 1,2 V, woraus Leistungsanpassung der Zelle ableitet. Nach 5 Stunden wurde die Zelle lastfrei gestellt und unter Elektrolyt 5 Mol KOH und 1,2 V (OCV) rund 11 Stunden weiter betrieben. Danach wurde die Anode ausgebaut und ausgewogen. Die Masse der Silizium-Anode zu Versuchsbeginn wurde zu 0,9 g ausgewogen, nach 5 Stunden Belastung sowie 11 Stunden unter Elektrolyten betrug die Anoden-Masse noch 0,529g. Der Siliziumverbrauch berechnet sich durch Subtraktion der zwei Massenwerte auf 0,9g-0,529g=0,371g. Analog zu den vorigen Beispielen berechnet sich der Siliziumverbrauch der dem Stromfluss zugeordnet werden kann, dann auf ~39 mg, woraus sich dann eine Anoden-Materialeffizienz von 3,49% ergibt.

Zelle EM 13 ist das Beispiel mit Elektrolytmanagement: Über 5 Stunden wurde die Zelle mit circa 6760 Mikro-Ampere je cm$^2$ belastet. Die Zellspannung betrug 0,6 V, die OCV 1,2 V, woraus Leistungsanpassung der Zelle ableitet. Nach 5 Stunden wurde die Zelle lastfrei gestellt und unter Elektrolyt 5 Mol KOH und 1,2 V (OCV) rund 11 Stunden weiter betrieben. Danach wurde der Elektrolyt durch destilliertes Wasser ausgetauscht und weitere 32 Stunden last- und elektrolytfrei betrieben. Danach wurde die Anode ausgebaut und ausgewogen. Die Masse der Silizium-Anode zu Versuchsbeginn wurde zu 0,91g ausgewogen, nach 5 Stunden Belastung und 11 Stunden unter Elektrolyten sowie 32 Stunden unter H$_2$O betrug die Anoden-Masse noch 0,523g. Der Siliziumverbrauch berechnet sich durch Subtraktion der zwei Massenwerte auf 0,91g-0,523g=0,371g. Analog zu den vorigen Beispielen berechnet sich der Siliziumverbrauch der dem Stromfluss zugeordnet werden kann, dann auf ~40mg, woraus sich dann eine Anoden-Materialeffizienz von 10,27% ergibt.

Zelle EM 14 ist ein weiteres Beispiel mit Elektrolytmanagement: Über 5 Stunden wurde die Zelle mit ~6240 MikroAmpere je cm$^2$ belastet. Die Zellspannung betrug 0,6 V, die OCV 1,2 V, woraus sich Leistungsanpassung der Zelle ableitet. Nach 5 Stunden wurde die Zelle lastfrei gestellt und der Elektrolyt 5 Mol KOH durch destilliertes Wasser ausgetauscht und die Zelle weitere 43 Stunden last- und elektrolytfrei betrieben. Danach wurde die Anode ausgebaut und ausgewogen. Die Masse der Silizium-Anode zu Versuchsbeginn wurde zu 0,95 g ausgewogen, nach 5 Stunden Belastung und 43 Stunden unter destilliertem H$_2$O betrug die Anoden-Masse noch 0,815g. Der Siliziumverbrauch berechnet sich durch Subtraktion der zwei Massenwerte auf 0,95g-0,0,815g=0,135g. Analog zu den vorigen Beispielen berechnet sich der Siliziumverbrauch der dem Stromfluss zugeordnet werden kann, dann auf ~37mg, woraus sich dann eine Anoden-Materialeffizienz von 27,17% ergibt.

Diese Beispiele belegen, dass durch das Elektrolytmanagement eine deutliche Leistungssteigerung für Silizium-Anodenmaterial erzielbar ist. Des Weiteren wurde gezeigt, dass das erfinderische Elektrolytmangement seine vorteilhafte Wirkung besonders dann entfaltet, wenn Maßnahmen zur Leistungssteigerung des Silizium-Anodenmaterials zur Anwendung kommen z.B. Vergrößerung der inneren Oberfläche durch verdichtendes Sintern oder Steigern der Reaktivität des Silizium-Anodenmaterials durch Dotieren oder Legieren bspw. Bor, Antimon etc. (Fig. 3) oder Zugabe organischer Additive.

**Tabelle 4a:** Belastungsversuche mit diesem Silizium-Anodentyp mit und ohne Elektrolytmanagement

| | Elektrode n-Fläche in cm$^2$ | Spezifische Stromstärke MikroAmpere | Anode | Zelle OCV in Volt | Zelle unter Last in Volt | Zeitdauer unter Elektrolyte n in Stunden | Versuchszeit Dauer in Stunden |
|---|---|---|---|---|---|---|---|
| Zelle | 4,5 | 6600 | Si/8 | 1,2 | 0,6 | 16 | 16 |
| Zelle | 4,5 | 6760 | Si/8 | 1,2 | 0,6 | 16 | 48 |
| Zelle | 4,5 | 6240 | Si/8 | 1,2 | 0,6 | 5 | 48 |
| | | | | | | | |
| Zelle 1 | 0,44 | 50 | Si-wafer | 1,4 | 1,2 | 24 | 48 |
| Zelle 2 | 0,44 | 50 | Si-wafer | 1,4 | 0 | 24 | 48 |
| Zelle 3 | 0,44 | 50 | Si-wafer | 1,4 | 1,25 | 24 | 48 |
| Zelle 4 | 0,44 | 50 | Si-wafer | 1,4 | 0 | 24 | 48 |
| Zelle 8 | 0,44 | 50 | Si-wafer | 1,4 | 1,25 | 48 | 48 |
| Zelle 9 | 0,44 | 50 | Si-wafer | 1,4 | 1,25 | 48 | 48 |
| Zelle 10 | 0,44 | 50 | Si-wafer | 1,4 | 1,25 | 48 | 48 |
| Zelle 11 | 0,44 | 50 | Si-wafer | 1,4 | 1,25 | 48 | 48 |
| Si/8: gesinterte Elektrode (Scheibe), Si-Wafer: Scheibe aus Si-Wafer, Zelle: Fig. 1b | | | | | | | |

**Tabelle 4b:** Belastungsversuche mit diesem Silizium-Anodentyp mit und ohne Elektrolytmanagement

| | Versuchszeit hochgerechnet unter Elektrolyt | Massenverl ust insgesamt Anode in Versuchszei t in mq | Massenverlust Hochrechnung auf 48 Stunden **) ohne Elektrolytaustausch | Strommen ge entnomme n in A | Molare Stoffmenge (Strommenge /e) | mg Silizium durch Stromverbrauch | Anodeneffizienz in % Si gesamt Stromverbrauch |
|---|---|---|---|---|---|---|---|
| Zelle E M 12 | 48 | 371 | 1113**) | 534,6 | 0,0013853 32 | 38,79 | 3,49% |
| Zelle E M 13 | enfällt | 387 | 387 | 547,56 | 0,0014189 21 | 39,73 | 10,27% |
| Zelle E M 14 | enfällt | 135 | 135 | 505,44 | 0,0013097 73 | 36,67 | 27,17% |
| | | | | | | | |
| | | | | | | | |
| Zelle 1 | 48 | 5,39 | 10,28**) | 1,9008 | 4,92564E-06 | 0,14 | 1,28% |
| Zelle 2 | 48 | 4,58 | 9,16**) | 0 | 0 | 0,00 | |
| Zelle 3 | 48 | 5,53 | 11,06**) | 1,9008 | 4,92564E-06 | 0,14 | 1,25% |
| Zelle 4 | 48 | 5,41 | 10,82**) | 0 | 0 | 0,00 | |
| Zelle 8 | entfällt | 9,9 | 9,9 | 0 | 0 | 0,00 | |
| Zelle 9 | entfällt | 11,5 | 11,5 | 3,8016 | 4,92564E-06 | 0,28 | 2,40% |
| Zelle 10 | entfällt | 10,6 | 10,6 | 1,9008 | 4,92564E-06 | 0,14 | 1,30% |

| | Versuchszeit hochgerechnet unter Elektrolyt | Massenverlust insgesamt Anode in Versuchszeit in mq | Massenverlust Hochrechnung auf 48 Stunden **) ohne Elektrolytaustausch | Strommenge entnommen in A | Molare Stoffmenge (Strommenge /e) | mg Silizium durch Stromverbrauch | Anodeneffizienz in % Si gesamt Stromverbrauch |
|---|---|---|---|---|---|---|---|
| Zelle 11 | entfällt | 10,7 | 10,7 | 1,9008 | 4,92564E-06 | 0,14 | 1,29% |

**Tabelle 5** zeigt eine Auswahl zu weiteren Siliziumformen, die als Anodenmaterial verwendet wurden. Die Materialien unterscheiden sich in ihren Reinheiten, was Auswirkung auf den Innenwiderstand der Silizium-Primär-Zelle hat. Mit den Siliziumpartikelsystemen gemäß **Tabelle 4** A, B, C, D wurden zusammen mit den Kohlenstoff-Partikelsystemen gemäß Tabelle 6 als Leitungsvermittler Anodenpasten hergestellt und in Versuchsanordnungen nach **Fig. 1a** weitere Silizium-Primär-Zellen hergestellt und mit verschiedenen Elektrolyten betrieben.

Tabelle 5: Röntgenamorphe Silizium-Partikel

| Silizium-Partikel | Primärpartikel [nm] | Agglomerate und / oder Aggregate [nm] | Dotierung | Si [Gew.-%] |
|---|---|---|---|---|
| A | 5-15 | 150-1000 | < 0,1 Gew.-ppm Intrinsischer Halbleiter | 99,99999 (electronic grade) |
| B | 100-300 | 200-2000 | < 10 Gew-ppm | 99,999 |
| C | 100-300 | 400-1000 | 1 Gew.-% Intrinsischer p-Leiter | 98,9 |
| D | 100-300 | 400 - 1000 | 1,8 Gew.-% Bor $(5 \cdot 10^{19}/cm^3)$ | 98,19 |

Tabelle 6: Leitfähigkeitsvermittler enthaltend Kohlenstoff enthaltende Partikel

| Kohlenstoff enthaltende Partikel | Kohlenstoff enthaltende Partikel | Partikelgröße [nm] | Agglomerate und/ oder Aggregate [nm] | Dotierung |
|---|---|---|---|---|
| Vulcan-XC72R (Elektroruß) | | 20 bis 40 oder 25 bis 80 | 350 bis 1500 350 bis 1500 | < 100 Gew.-ppm n-Donoren und p-Akzeptoren |
| Graphit (Naturgraphit vermalen) | ca. 20% Fettanteil | 16000-63000 | Flocken, flockig | < 1 Gew.-% |

Mit den Siliziumpartikeln und den Kohlenstoffpartikeln wurden Elektrodenpasten hergestellt, die alternativ mit Bindemittel versetzt gepresst werden können. Mit den Partikeln C wurden ebenfalls analoge Versuche wie für die Partikel D durchgeführt.

**Batterieversuche C.** Der Aufbau der getesteten Primärzelle 1 **Figur 1a** mit Silikonscheiben 6a und 6b zur Aufnahme des Anoden- und Kathodenmaterials. In die Bohrung 10 der Silikonscheibe 6a auf einer Graphitfolie 5 auf der Kontaktelektrode 3 liegt wurde Kathodenmaterial (beispielsweise 90 % $MnO_2$ + 10 % Graphit + Elektrolytlösung) eingebracht und der Separator 7 aufgelegt. Auf einer Seite ragt der Separator 7 heraus, damit beim Zusammenpressen überschüssige Elektrolytlösung heraustreten kann. Die obere Silikonscheibe 6b wird aufgelegt und in die Bohrung das jeweilige Anodenmaterial (als Anodenpaste) eingefüllt und darauf die Graphitfolie 4 und Kontaktelektrode 2 aufgelegt und mit 900 N (entspr. 20 bar bei 4,5 $cm^2$) zusammengepresst. Die Kraft verteilt sich über die Elektrodenpasten und Silikonscheiben. Mit einer Primärzelle gemäß obigem Primärzellenaufbau kann an den Elektroden eine Zell-Spannung Uo gemessen werden.

**Vergleichsbeispiel 1:**

Die Spannung einer Versuchszelle mit Silizium- und Kohlenstoff-Partikeln als Anodenmaterial gemäß Tabelle 5 Zeile B und Tabelle 6 Zeile Graphit wurde mit Siliziumpartikeln B (Pulver B) 80 Gew.-% mit 20 Gew.-% Graphitpulver gemischt und eine Kathodenpaste und einer Kathode bestehend aus 90 mol-% $MnO_2$ und 10 mol-% Graphit lag mit wässriger, 20 mol-%iger Ammoniumchloridlösung ($NH_4Cl$) als Elektrolyt zu Beginn bei rund 400 mV.

Messungen des Innenwiderstandes der Anode und damit des Anodenmaterials mit Silizium-Partikeln B 80 Gew.-% und 20 Gew.-% hohe Werte im Bereich von 4 Kilo-Ohm je cm. Die Strombelastung des Anodenmaterials mit Silizium-Partikeln B 20 Gew.-% und 80 Gew.-% Graphit lag bei 100 MikroAmpere/$cm^2$ bei einer Leistungsdichte von ~0,01 mW/$cm^2$.

Das Anodenmaterial wurde dazu feucht mit wässrigem Elektrolyten vermessen.

**Beispiel: Silizium-Partikeln D in alkalischer Elektrolytlösung**

Die zuvor beschriebene Silizium-Primärzelle mit Siliziumpartikel-Grafit-Anode wurde über den Separator 7 - Fig. 1a, also über das Löschpapier dem Elektrolyten Na$_2$CO$_3$-Zusätze zugegeben. Das Natriumcarbonat diffundierte langsam in die Zelle ein, was einen langsamen Anstieg der Zellspannung von 0,4 Volt auf 0,7 Volt bewirkte. Auch mit den folgenden Silizium-Partikeln D konnten Primärzellen hergestellt werden und vergleichbare Zellspannungen gemessen werden. Ferner könnten mit weiteren Siliziumpartikelsystemen, die sich im Vorhandensein, genauer in der Konzentration der Siliziumnebenkomponenten wie Bor, Lithium, Natrium, Kalium, Aluminium etc. unterschieden, Beispielversuche durchgeführt. Beispielsweise konnte erst deutlich reduzierten Aluminiumanteilen (von 10000ppm auf 10ppm) der Spannungsanstieg von 0,37 Volt auf 0,72 Volt beobachtet werden. Die Schüttdichten (g/ml) der verwendeten Komponenten sind (Silizium-Partikel B: 0,114; 0,110; Silizium-Partikel D: 0,027; 0,024; Silizium-Partikel A: 0,039; 0,039; Vulcan-XC72R: 0,080; Graphit: 0,30; 30 Gew.-% Silizium-Partikel D + Vulcan-XC72R 0,053; 0,053; 0,053/ 30 Gew.-% Silizium-Partikel A + Vulcan-XC72R 0,064; 0,064).

Die **Figuren 6a Nr. 1 bis 3, 6b Nr. 1 bis 3** und **6c Nr. 1 bis 3** stellen dar, den Einfluss von Polyalkylenoxid-Gruppen aufweisenden Verbindungen im wässrigen Elektrolyten bei Raumtemperatur (25 °C) und erhöhter Temperatur (60 °C) in einer Zelle gemäß **Figure 1b** und Elektrodenfläche von 0,44 cm$^2$. Dargestellt sind in den Figuren 6a Nr. 1 bis 3 von links nach rechts: **Fig. 6a.1:** OCV und 22 Mikroampere Last Diagramm links (120 Stunden), **Figur 6a.2:** Korrosion unter OCV Mitte, **Figur 6a.3:** Korrosion unter elektrischer Last bei 25 °C (rechts, Entladung).

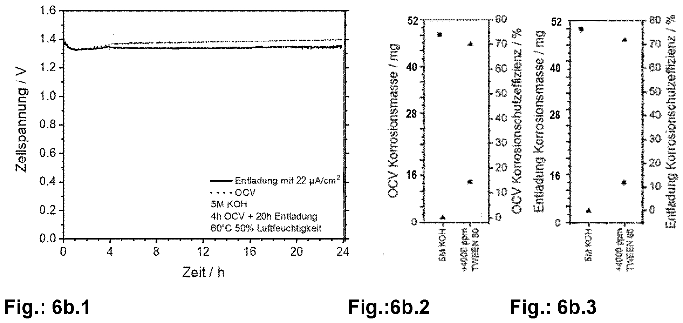

Figur 6a.1 stellt dar die Zellspannung von ca. 1,3 Volt bei Leerlaufspannung (OCV) sowie unter Last bei 22 μA/cm$^2$, (Mikroampere/cm$^2$) mit einer Zellspannung von ca. 1,1 Volt bei 25 °C und 50 % rel. Feuchte. In 5M KOH in Gegenwart von 4000 ppm-Gew. Tween 80 (CAS: 9005-65-6, Polysorbat). Die Korrosionsmasse in mg (■) beträgt im OCV Betrieb gemäß **Figur 6a.2** in 5 M KOH ohne Zusatz von Tween 80 bei ca. 22 mg und mit Zusatz von Tween 80 bei 25 °C etwa 7 mg. Die OCV Korrosionsschutzeffizienz in % (▲), die durch den Zusatz von Tween 80 erzielt wird, liegt somit bei ca. 70 %. Ohne Tween 80 ist das System ohne Korrosionsschutz (0%). Unter elektronischer Last (Fig. 6.a.3) bei 22 μA/cm$^2$ beträgt die Korrosionsmasse (■) in 5 M KOH ohne Zusatz von Tween 80 gemäß **Figur 6a.3** etwa 24,6 mg und mit Zusatz von Tween 80 bei 25 °C ca. 8 mg. Die OCV Korrosionsschutzeffizienz (▲) beträgt somit auch unter Last etwa 72%, die durch den Zusatz von Tween 80 erzielt wird.

Gleichfalls sind in den **Figuren 6b Nr. 1 bis 3** von links nach rechts dargestellt: **Fig. 6b.1:** OCV und 22 Mikroampere Last Diagramm links (24 Stunden), **Figur 6b.2:** Korrosion unter OCV Mitte, Figur 6b.3: Korrosion unter elektrischer Last rechts 60°C (Entladung) Figur6b.1 stellt dar die Zellspannung von ca. 1,38 Volt bei Leerlaufspannung (OCV) sowie unter Last bei 22 μA/cm$^2$, (Mikroampere/cm$^2$) mit einer Zellspannung von ca. 1,35 Volt bei 60 °C und 50 % rel. Feuchte. In 5M KOH in Gegenwart von 4000 ppm-Gew. Tween80 (CAS: 9005-65-6, Polysorbat). Die Korrosionsmasse (■) beträgt im OCV Betrieb gemäß **Figur 6b.2** in 5 M KOH ohne Zusatz von Tween 80 bei ca. 49 mg und mit Zusatz von Tween 80 bei 60 °C etwa 14 mg. Die OCV Korrosionsschutzeffizienz (▲), die durch den Zusatz von Tween 80 erzielt wird, liegt somit bei ca. 72 %. Unter elektrischer Last (Entladung) bei 22 μA/cm$^2$ beträgt die Korrosionsmasse (■) in 5 M KOH ohne Zusatz von Tween 80 gemäß **Figur 6b.3** etwa 51 mg und mit Zusatz von Tween 80 bei 60 °C ca. 13 mg. Die OCV Korrosionsschutzeffizienz (▲) beträgt somit auch unter Last etwa 73%, die durch den Zusatz von Tween 80 erzielt wird. Ohne Zusatz ist die Korrosionsschutzeffizienz 0%.

**Patentansprüche**

1. Vorrichtung umfassend mindestens eine elektrochemische Primärzelle, wobei die Primärzelle aufweist eine Anode, eine Kathode, einen Hohlraum zur Aufnahme eines Elektrolyten, wobei die Anode als Anodenmaterial Silizium umfasst,
   **dadurch gekennzeichnet, dass**

   der Hohlraum mindestens eine Öffnung zur Zuführung und/oder Entfernung des Elektrolyten aufweist, wobei die Anordnung von Anode, Kathode und Hohlraum mit der mindestens einen Öffnung zur Zuführung und/oder Entfernung des Elektrolyten dergestalt ist, dass zwischen Anode und Kathode ein Stromfluss durch den Elektrolyten möglich ist, wenn der Hohlraum zumindest teilweise bis vollständig mit dem Elektrolyten befüllt ist, wobei der Hohlraum der Primärzelle über die mindestens eine Öffnung mit einem ersten Reservoir, das mit Elektrolyt befüllbar ist, kommuniziert,
   wobei die Vorrichtung eine Elektrolytfördereinheit aufweist.

2. Vorrichtung nach Anspruch 1, **dadurch gekennzeichnet, dass** der Hohlraum der Primärzelle über die mindestens eine Öffnung mit einem zweiten Reservoir kommuniziert, wobei das zweite Reservoir mit einer protischen Flüssigkeit, die kein Elektrolyt ist, befüllbar ist, insbesondere weist die protische Flüssigkeit einen pH-Wert im Bereich von 5,5 bis 8 auf, bevorzugt ist die protische Flüssigkeit wässrig.

3. Vorrichtung nach Anspruch 1 oder 2, **dadurch gekennzeichnet, dass** der Hohlraum mindestens eine Öffnung zur Zuführung und/oder Entfernung des Elektrolyten aufweist, und der Hohlraum der Primärzelle über die mindestens eine Öffnung mit dem ersten Reservoir, das mit Elektrolyt befüllbar ist, kommuniziert.

4. Vorrichtung nach einem der Ansprüche 1 bis 3, **dadurch gekennzeichnet, dass** der Hohlraum in der Primärzelle eine erste und eine zweite Öffnung aufweist, wobei durch die erste Öffnung ein Elektrolyt in den Hohlraum zuführbar und aus der zweiten Öffnung entfernbar ist.

5. Vorrichtung nach einem der Ansprüche 1 bis 4, **dadurch gekennzeichnet, dass** der Hohlraum in der Primärzelle eine erste und optional eine zweite Öffnung aufweist, wobei durch die erste Öffnung ein Elektrolyt in den Hohlraum zuführbar und entfernbar ist oder durch die erste Öffnung ein Elektrolyt in den Hohlraum zuführbar und durch die zweite Öffnung entfernbar ist, wobei vorzugsweise die erste und zweite Öffnung jeweils unabhängig über eine Leitung mit dem ersten Reservoir verbunden ist.

6. Vorrichtung nach einem der Ansprüche 1 bis 5, **dadurch gekennzeichnet, dass** die Fördereinheit für den Elektrolyten umfasst eine Pumpe, insbesondere eine Alkali beständige Pumpe, Verdichter oder Umwälzeinheit, bevorzugt eine Membranpumpe, Strömungspumpe, Verdrängerpumpe, Strahlpumpe, Peristaltikpumpe, Schlauchpumpe, Kolbenpumpe, Kolbenmembranpumpe, Drehschieberpumpe, Exenterpumpe, Sumpfpumpe oder Vakuumpumpe.

7. Vorrichtung nach einem der Ansprüche 1 bis 6, **dadurch gekennzeichnet, dass** die Vorrichtung jeweils unabhängig im Hohlraum, in der Öffnung, der ersten Öffnung, zweiten Öffnung, in einer oder mehreren Leitungen, im ersten Reservoir, im zweiten Reservoir, und/oder in der Fördereinheit für den Elektrolyten mindestens eine Absperrarmatur aufweist, die zum Regeln des Zuführen und Entfernen, des Elektrolyten, insbesondere des alkalischen Elektrolyten, und/oder der protischen Flüssigkeit, insbesondere einer protischen Flüssigkeit mit einem pH im Bereich von 5,5 bis 8, geeignet sind, umfasst.

8. Vorrichtung nach einem der Ansprüche 1 bis 5, **dadurch gekennzeichnet, dass** die Anode als Anodenmaterial Silizium mit einem Gehalt an Bor von 10 Gew.-ppm bis 1,8 Gew.-% in Bezug auf die Gesamtzusammensetzung des Siliziums von 100 Gew.-% aufweist, insbesondere weist das Anodenmaterial Silizium-Partikel mit einem Gehalt an Bor von 10 Gew.-ppm bis 1,8 Gew.-% in Bezug auf die Gesamtzusammensetzung der Silizium-Partikel von 100 Gew.-% auf, besonders bevorzugt ist Anodenmaterial in Form von aneinander gesinterten Silizium-Partikeln.

9. Vorrichtung nach einem der Ansprüche 1 bis 6, **dadurch gekennzeichnet, dass** der Hohlraum eine Durchflusszelle ist.

10. Vorrichtung nach einem der Ansprüche 1 bis 9, **dadurch gekennzeichnet, dass** der Hohlraum gebildet wird aus einem Gehäuse in dem die Anode umfassend als Anodenmaterial Silizium, insbesondere eine Anordnung von plattenförmigen Anoden nach außen flüssigkeitsdicht im Hohlraum der Vorrichtung am Gehäuse anbringbar ist und, wobei im Bereich mindestens einer Seitenwand des Gehäuses eine oder mehrere Kathoden, insbesondere Luftkathoden, jeweils vom Hohlraum des Gehäuses durch mindestens einen Separator getrennt anbringbar sind, und, wobei die mindestens eine Öffnung zur Zuführung und/oder Entfernung des Elektrolyten aus dem Hohlraum an der Seitenwand des Gehäuses vorgesehen ist, vorzugsweise ist die mindestens eine Öffnung nicht an einer der Seitenwände vorgesehen an denen die Kathode(n) angeordnet sind.

11. Verfahren zum Betrieb einer Vorrichtung umfassend mindestens eine elektrochemische Primärzelle, wobei die elektrochemische Primärzelle eine Anode, eine Kathode und einen Hohlraum zur Aufnahme eines Elektrolyten aufweist, wobei der Hohlraum mindestens eine Öffnung zur Zuführung und/oder Entfernung des Elektrolyten aufweist, wobei die Anordnung von Anode, Kathode und Hohlraum mit der mindestens einen Öffnung zur Zuführung und/oder Entfernung des Elektrolyten dergestalt ist, dass zwischen Anode und Kathode ein Stromfluss durch den Elektrolyten möglich ist, wenn der Hohlraum zumindest teilweise bis vollständig mit dem Elektrolyten befüllt ist, und, wobei die Anode als Anodenmaterial Silizium umfasst, wobei der Hohlraum der Primärzelle über die mindestens eine Öffnung mit einem ersten Reservoir, das mit Elektrolyt befüllbar ist, kommuniziert, und, wobei die Vorrichtung eine Elektrolytfördereinheit aufweist,

indem das Verfahren zum Betrieb der mindestens einen Primärzelle umfasst

a) einen Entladeschritt in dem der Elektrolyt im Hohlraum vorliegt und b) Betrieb der Primärzelle in Leerlaufspannung,

wobei a) der Entladeschritt die Schritte umfasst

i) Zuführen oder Vorhandensein von Elektrolyt im Hohlraum, und optional Vorhandensein von Elektrolyt im ersten Reservoir,

ii) Entladen der mindestens einen Primärzelle, und optional

b) Betrieb der Primärzelle in Leerlaufspannung mit den Schritten i) Entfernen des Elektrolyten aus dem Hohlraum, insbesondere in das erste Reservoir, und optional ii) Zuführen einer protischen Flüssigkeit die kein Elektrolyt ist in den Hohlraum, insbesondere aus einem zweiten Reservoir.

**12.** Verfahren nach Anspruch 11, **dadurch gekennzeichnet, dass** b) der Betrieb der Primärzelle in Leerlaufspannung umfasst ii) Zuführen einer protischen Flüssigkeit in den Hohlraum, die kein Elektrolyt ist, insbesondere weist die protische Flüssigkeit einen pH-Wert von 5,5 bis 8 auf und ist bevorzugt wässrig.

**13.** Verfahren nach Anspruch 11, **dadurch gekennzeichnet, dass** b) der Betrieb der Primärzelle in Leerlaufspannung umfasst ii) Zuführen der protischen Flüssigkeit in den Hohlraum umfasst satzweises, kontinuierliches, diskontinuierliches und/oder periodisches Zuführen der protischen Flüssigkeit.

**14.** Verfahren nach Anspruch 11 bis 13, **dadurch gekennzeichnet, dass** das Verfahren des Betriebs der mindestens einen Primärzelle umfasst a) Entladeschritt mit i) Zuführen oder Vorhandensein von Elektrolyt in den Hohlraum aus dem ersten Reservoir mittels Elektrolytzuführeinheit,

ii) Entladen der mindestens einen Primärzelle,
b) Betrieb in Leerlaufspannung,
i) Entfernen des Elektrolyten aus dem Hohlraum und
ii) Zuführen der protischen Flüssigkeit, die kein Elektrolyt ist, insbesondere aus dem zweiten Reservoir,
iii) Entfernen der protischen Flüssigkeit, die kein Elektrolyt ist aus dem Hohlraum, insbesondere in das zweite Reservoir, wobei die Schritte b) ii) und iii) kumulativ erfolgen oder ausgelassen werden,

optional erfolgt in b) ii) ein Einstellen der Temperatur der protischen Flüssigkeit,
wobei die Schritte a) Entladeschritt und b) Betrieb in Leerlaufspannung abwechselnd nacheinander durchgeführt werden und vorzugsweise wiederholt nacheinander durchgeführt werden.

**15.** Verfahren nach einem der Ansprüche 11 bis 14, **dadurch gekennzeichnet, dass** das Verfahren ein computerimplementiertes Verfahren (ein von einem Computer ausgeführtes Verfahren ist).

**16.** Verfahren nach Anspruch 15, **dadurch gekennzeichnet, dass** das Verfahren eine Ermittlung des Innenwiderstandes der mindestens einen Silizium-Primärzelle mit den Schritten umfasst,

1. Messen einer Spannung der Primärzelle zu einer ersten Zeit, zu der die Primärzelle nicht zu einer elektronischen Last zugeschaltet ist Messung von Uo,
2. Zuschalten einer elektronische Last, welches zu einem Stromfluss I1 führt,
3. Messung der Spannung U1,
4. Berechnen des Kurzschlussstromes Ik aus diesen Größen und Berechnung des Ri aus Uo/Ik. Ik=(Uo)*Ikl1/(Uo-Ukl1), optional
5. dynamische und/oder kontinuierliche Wiederholung der Berechnung und optional Abschätzen der Restkapazität.

**17.** System umfassend eine Vorrichtung nach einem der Ansprüche 1 bis 10, wobei die Vorrichtung größer gleich 2 Primärzellen umfasst, insbesondere bis 15.000 Primärzellen.

**18.** System zur Datenverarbeitung umfassend Mittel zur Ausführung des Verfahrens nach einem der Ansprüche 11 bis 16, insbesondere für den Betrieb einer Vorrichtung nach einem der Ansprüche 1 bis 10 oder eines Systems nach Anspruch 17.

**19.** Computerprogrammprodukt, umfassend Befehle, die bei der Ausführung des Programms durch einen Computer diesen veranlasst, das Verfahren nach einem der Ansprüche 11 bis 16 und/oder das Verfahren nach einem der Ansprüche für den Betrieb einer Vorrichtung nach einem der Ansprüche 1 bis 10 oder für den Betrieb eines Systems nach Anspruch 17 auszuführen.

20. Computer lesbares Medium, umfassend Befehle, die bei der Ausführung durch einen Computer diesen veranlassen, das Verfahren nach einem der Ansprüche 11 bis 16 auszuführen und/oder das Verfahren nach einem der Ansprüche für den Betrieb einer Vorrichtung nach einem der Ansprüche 1 bis 10 oder für den Betrieb eines Systems nach Anspruch 17 auszuführen.

**Fig. 1a**

**Fig. 1b**

**Fig. 2a**

**Fig. 2b**

Fig. 2c

Fig. 2d

Fig. 2e

Fig. 3

**Fig. 4a**

**Fig. 4b**

**Fig. 5**

**Fig.: 6a.1**

**Fig.:6a.2**

**Fig.: 6a.3**

Fig.: 6b.1

Fig.:6b.2

Fig.: 6b.3

Europäisches
Patentamt

European
Patent Office

Office européen
des brevets

**EUROPÄISCHER RECHERCHENBERICHT**

**Nummer der Anmeldung**

**EP 22 15 8309**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 692 20 030 T2 (ELECTRIC FUEL LTD [IL]) 11. Dezember 1997 (1997-12-11) * Absätze [0097], [0098], [0103], [0106]; Anspruch 1; Abbildungen 1,8,12,13 * ----- | 1-20 | INV. H01M4/38 H01M6/52 H01M12/06 H01M50/664 H01M50/691 |
| Y | DE 10 2014 018232 B3 (MANN & HUMMEL GMBH [DE]) 8. Oktober 2015 (2015-10-08) * Absatz [0046] * ----- | 1,3-11, 15-20 | H01M4/66 H01M4/90 H01M6/50 H01M50/138 |
| X | US 5 260 144 A (O'CALLAGHAN WILFRID B [CA]) 9. November 1993 (1993-11-09) | 1-20 | H01M50/209 H01M4/86 |
| Y | * Ansprüche 1,6,7 * ----- | 1,3-11, 15-20 | H01M12/02 H01M12/04 H01M50/673 H01M50/77 |

**RECHERCHIERTE SACHGEBIETE (IPC)**

H01M

Der vorliegende Recherchenbericht wurde für alle Patentansprüche erstellt

| Recherchenort | Abschlußdatum der Recherche | Prüfer |
|---|---|---|
| München | 5. August 2022 | Steinreiber, J |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

.......................................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 8309

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-08-2022

| Im Recherchenbericht angeführtes Patentdokument | Datum der Veröffentlichung | Mitglied(er) der Patentfamilie | Datum der Veröffentlichung |
|---|---|---|---|
| DE 69220030 T2 | 11-12-1997 | AT 152291 T | 15-05-1997 |
| | | AT 153802 T | 15-06-1997 |
| | | DE 69220030 T2 | 11-12-1997 |
| | | DE 69309986 T2 | 25-09-1997 |
| | | EP 0555581 A1 | 18-08-1993 |
| | | EP 0555978 A1 | 18-08-1993 |
| | | ES 2103421 T3 | 16-09-1997 |
| | | ES 2106147 T3 | 01-11-1997 |
| | | IL 100903 A | 29-06-1995 |
| | | US 5599637 A | 04-02-1997 |
| DE 102014018232 B3 | 08-10-2015 | DE 102014018232 B3 | 08-10-2015 |
| | | WO 2016087194 A2 | 09-06-2016 |
| US 5260144 A | 09-11-1993 | AT 109928 T | 15-08-1994 |
| | | AU 5417090 A | 22-10-1990 |
| | | CA 1315840 C | 06-04-1993 |
| | | DE 69011514 T2 | 24-11-1994 |
| | | EP 0464111 A1 | 08-01-1992 |
| | | JP H04504329 A | 30-07-1992 |
| | | KR 920702034 A | 12-08-1992 |
| | | US 5260144 A | 09-11-1993 |
| | | WO 9011625 A1 | 04-10-1990 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *CHEMICAL ABSTRACTS,* 9005-65-6